(19) Europäisches Patentamt
European Patent Office
Office européen des brevets

(11) Veröffentlichungsnummer: **0 141 416 B1**

(12) **EUROPÄISCHE PATENTSCHRIFT**

(45) Veröffentlichungstag der Patentschrift: **16.08.89**

(51) Int. Cl.⁴: **C 09 B 62/012**, D 06 P 3/10, D 06 P 1/38

(21) Anmeldenummer: **84113295.4**

(22) Anmeldetag: **05.11.84**

(54) **Faserreaktive Chromkomplexe, deren Herstellung und Verwendung.**

(30) Priorität: **07.11.83 CH 5987/83**

(43) Veröffentlichungstag der Anmeldung: **15.05.85 Patentblatt 85/20**

(45) Bekanntmachung des Hinweises auf die Patenterteilung: **16.08.89 Patentblatt 89/33**

(84) Benannte Vertragsstaaten: **BE CH DE FR GB IT LI**

(56) Entgegenhaltungen:
**DE-C- 933 622**
**FR-A- 1 310 178**
**FR-A- 2 225 486**
**FR-A- 2 333 029**
**GB-A- 793 903**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Schütz, Hans Ulrich, Hans Huber-Strasse 23, CH-4053 Basel (CH)**
Erfinder: **Schlesinger, Ulrich, Dr., Hermann Sautter 5, D-7851 Binzen (DE)**
Erfinder: **Back, Gerhard, Dr., Hammerstrasse 5, D-7850 Lörrach (DE)**

(74) Vertreter: **Zumstein, Fritz, Dr. et al, Bräuhausstrasse 4, D-8000 München 2 (DE)**

**EP 0 141 416 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Metallkomplexfarbstoffe sind seit langem bekannt und werden in großem Umfang für das Färben und Bedrucken von Textilien aus Fasermaterialien in den verschiedensten Nuancen eingesetzt. Angesichts der immer höheren Anforderungen an diese Farbstoffe z.B. in bezug auf die Egalität der Ausfärbungen und das Echtheitsniveau ist der erreichte technische Stand vielfach nicht voll befriedigend. So genügen viele der bekannten 1:2-Metallkomplexazo- oder -azomethinfarbstoffe in bezug auf die Egalität der Ausfärbungen wegen mangelndem Diffusionsvermögen der Farbstoffe in der Faser nicht den heutigen Anforderungen; die meisten der bekannten 1:1-Metallkomplexazo- oder -azomethinfarbstoffe haben den Nachteil, daß sie bei einem stark sauren pH-Wert gefärbt werden müssen, bei dem einige Fasermaterialien geschädigt werden können.

Die der vorliegenden Erfindung zugrunde liegende Aufgabe war es, neue Metallkomplexazo- oder -azomethinfarbstoffe zu finden, die bei leichter Zugänglichkeit und einfacher Applikationstechnik egale Ausfärbungen bei gleichzeitig guten Allgemeinechtheiten, insbesondere Naßechtheiten, ergeben, die den heutigen Anforderungen genügen. Es hat sich gezeigt, daß die weiter unten definierten neuen Chromkomplexfarbstoffe diesen Anforderungen genügen.

Gegenstand der vorliegenden Erfindung sind Chromkomplexfarbstoffe der Formel

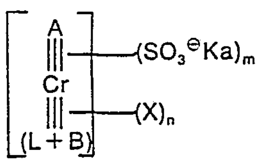

(1),

worin A der Rest eines dicyclisch metallisierbaren Azo- oder Azomethinfarbstoffes, B der Rest einer monoanionischen, zweizähnigen, komplexbildenden, organischen Verbindung, der über Sauerstoffatome mit dem Chromatom verbunden ist, L ein farbloser, monofunktioneller Ligand, X ein mit Halogen substituierter $C_{2-4}$-Alkanoyl-Reaktivrest, ein gegebenenfalls mit Halogen substituierter $C_{3-4}$-Alkenoyl-Reaktivrest oder ein Reaktivrest der Pyrimidinreihe, wobei der Reaktivrest X über ein Brückenglied an den Rest A und/oder B gebunden ist, Ka ein Kation, m = 1, 2 oder 3 und n = 1 oder 2 ist, und wobei die Gruppe $SO_3^{\ominus}Ka$ an den Rest A und/oder B gebunden ist.

Die erfindungsgemäßen Chromkomplexe der Formel (1) sind neutral. So ist der Rest B als zweizähnige, komplexbildende, organische Verbindung nur mit einer kovalenten und einer koordinativen Bindung an dem Chromkomplex beteiligt. Da die Chromkomplexe der Formel (1) ihre maximale Koordinationszahl 6 betätigen, enthalten die Komplexe noch einen monofunktionellen Liganden L, bei dem sich freie Elektronenpaare der Donatoratome an der Bindung beteiligen.

Der Azo- oder Azomethinfarbstoffrest A in Formel (1) kann außer den komplexbildenden Gruppen die üblichen in Farbstoffen vorkommenden Substituenten enthalten, wie z.B. Alkylgruppen mit 1 bis 5 Kohlenstoffatomen, wie Methyl, Äthyl, Propyl, Isopropyl und Butyl, Alkoxygruppen mit 1 bis 4 Kohlenstoffatomen, wie Methoxy, Äthoxy, Propoxy, Isopropoxy oder Butoxy, Acylaminogruppen mit 1 bis 6 Kohlenstoffatomen, wie Acetylamino und Propionylamino, Benzoylamino, Amino, Mono- oder Dialkylamino mit je 1 bis 4 Kohlenstoffatomen im Alkylrest, Phenylamino, Alkoxycarbonyl mit 1 bis 4 Kohlenstoffatomen im Alkoxyrest, Nitro, Cyano, Trifluormethyl, Halogen, wie Fluor, Chlor und Brom, Sulfamoyl, Carbamoyl, Ureido, Hydroxy, $C_{1-4}$-Alkylsulfonyl, wie z.B. Methylsulfonyl, Carboxy, Sulfomethyl und Sulfo sowie einen bis zwei faserreaktive Reste X und Arylazogruppen, wie z.B. die Phenylazo- und Naphthylazogruppe.

Als Azo- oder Azomethinfarbstoffrest A kommt insbesondere der Rest der Formel

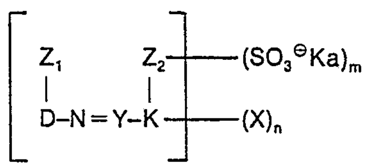

(2)

in Betracht, worin D der Rest einer Diazokomponente der Benzol- oder Naphthalinreihe, Y ein Stickstoffatom oder die CH-Gruppe, K für den Fall, daß Y ein Stickstoffatom ist, der Rest einer Kupplungskomponente, insbesondere der Benzol- oder Naphthalinreihe oder der heterocyclischen Reihe, oder, für den Fall, daß Y die CH-Gruppe ist, der Rest eines o-Hydroxybenzaldehyds oder eines o-Hydroxynaphthaldehyds, $Z_1$ in o-Stellung zu dem Rest –N=Y– die –O– oder –COO–Gruppe und $Z_2$ die –O– oder –N(R)–Gruppe ist, wobei R Wasserstoff, gegebenenfalls substituiertes $C_{1-4}$-Alkyl, wie z.B. Methyl, Äthyl, β-Hydroxyäthyl, Isopropyl, n-Propyl, sek.-Butyl, Isobutyl, tert.-Butyl und n-Butyl, oder gegebenenfalls substituiertes Phenyl, bedeutet und $Z_2$ in Nachbarstellung zu dem Rest –N=Y– an K gebunden ist, Ka, X, m und n die unter Formel (1) angegebenen Bedeutungen haben.

Aus der großen Zahl möglicher zweizähniger, komplexbildender, organischer Verbindungen, die den Rest B enthalten, kommen die chelatbildenden Mittel in Betracht, die sich mit dem Chrom über eine kovalente und eine koordinative Bindung verbinden, wobei sie mit dem Chrom vorzugsweise einen 5- oder 6-Ring bilden.

Insbesondere ist B der Rest eines β-Diketons, o-Hydroxyaldehyds, o-Nitrosophenols oder o-Nitrosonaphthols oder der Rest der Formeln

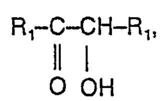, 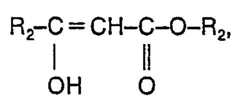, 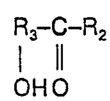

worin $R_1$ Aryl, insbesondere Phenyl, $R_2$ $C_{1-4}$-Alkyl oder Aryl, insbesondere Phenyl und $R_3$ Aryl, insbesondere Phenyl ist, wobei die HO-Gruppe in o-Stellung zum Carbonylrest an $R_3$ gebunden ist, und die Reste $R_1$, $R_2$ und $R_3$ gegebenenfalls substituiert sind, z.B. durch Halogen, wie Fluor, Chlor oder Brom, $C_{1-4}$-Alkoxy, wie Methoxy oder Äthoxy.

Besonders bevorzugt sind Verbindungen, worin B den Rest von Acetylaceton, Benzoylaceton, Acetessigsäure-methylester oder -äthylester, Benzoylessigsäureäthylester, 2-Hydroxyacetophenon, 2-Hydroxybenzophenon, Dibenzoylmethan, Tropolon, Salicylaldehyd, Malonsäuredialdehyd, 2-Buten-3-hydroxycarbonsäureäthylester, 1-Phenyl-3-methyl-4-acetyl- oder -4-benzoylpyrazol-5-on bedeutet. Insbesondere ist B der Rest von Acetylaceton.

Der monofunktionelle Ligand L in Formel (1) bedeutet vorwiegend $H_2O$, $NH_3$, $R_4$–OH, $R_4$–$NH_2$, $(R_4)_2NH$, $(R_4)_3N$ oder Pyridin, wobei $R_4$ $C_{1-4}$-Alkyl, wie z.B. Methyl, Äthyl, Propyl, Isopropyl oder Butyl bedeutet.

Unter dem faserreaktiven Rest X in Formel (1) werden solche Acylreste verstanden, die eine oder mehrere reaktive Gruppen oder abspaltbare Substituenten im Molekül aufweisen, welche z.B. mit Cellulosematerialien in Gegenwart säurebindender Mittel und gegebenenfalls unter Einwirkung von Wärme mit den Hydroxylgruppen der Cellulose oder mit synthetischen oder natürlichen Polyamidfasern, wie z.B. Wolle, mit den $NH_2$-Gruppen dieser Fasern unter Ausbildung kovalenter Bindungen zu reagieren vermögen.

Vorzugsweise ist X über eine gegebenenfalls monoalkylierte Aminogruppe wie z.B. –NH–, $-N(CH_3)-$, $-N(C_2H_5)-$ oder $-N(C_3H_7)$ oder über ein eine Aminogruppe enthaltendes Brückenglied an den Rest A und/oder B gebunden.

Im einzelnen sind beispielsweise folgende Reaktivreste zu nennen:

Mono-, Di- oder Trihalogenpyrimidinylreste, wie 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder trichlormethyl- oder 5-carbalkoxy-pyrimidinyl-6-, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2,4-Dichlorpyrimidin-6-, 2,4,5-Trichlorpyrimidinyl-6-, sowie die entsprechenden Brom- und Fluor-Derivate der oben erwähnten chlorsubstituierten Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-chlor-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; sulfonylgruppenhaltige Pyrimidinringe, wie 2-Carboxy-methylsulfonyl-pyrimidinyl-4-, 2-Methylsulfonyl-6-methylpyrimidinyl-4-, 2-Methylsulfonyl-6-äthylpyrimidinyl-4-, 2-Phenylsulfonyl-5-chlor-6-methylpyrimidinyl-4-, 2,2-Bis-methylsulfonyl-pyrimidinyl-4-, 2,6-Bis-methylsulfonyl-5-chlor-pyrimidinyl-4-, 2,4-Bis-methylsulfonyl-pyrimidinyl-5-sulfonyl, 2-Methylsulfonyl-pyrimidinyl-4-, 2-Phenyl-sulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-äthyl-pyrimidinyl-4-, 2-Methylsulfonyl-5-chlor-6-chlormethyl-pyrimidinyl-4-, 2-Methylsulfonyl-4-chlor-6-methyl-pyrimidin-5-sulfonyl-, 2-Methylsulfonyl-5-nitro-6-methyl-pyrimidinyl-4-, 2,5,6-Tris-methylsulfonyl-pyrimidinyl-4-, 2-Methylsulfonyl-5,6-dimethyl-pyrimidinyl-4-, 2-Äthylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxy-pyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-Sulfoäthylsulfonyl-6-methyl-pyrimidinyl-4-, 2-Methylsulfonyl-5-brom-pyrimidinyl-4-, 2-Phenylsulfonyl-5-chlor-pyrimidinyl-4-, 2-Carboxy-methylsulfonyl-5-chlor-6-methyl-pyrimidinyl-4-, 2-Methylsulfonyl-6-chlorpyrimidinyl-4- und -5-carbonyl-, 2,6-Bis-(methylsulfonyl)-pyrimidin-4- oder -5-carbonyl, 2-Äthylsulfonyl-6-chlorpyrimidin-5-carbonyl-, 2,4-Bis-(methylsulfonyl)-pyrimidin-5-sulfonyl-, 2-Methylsulfonyl-4-chlor-6-methylpyrimidin-5-sulfonyl- oder -carbonyl.

Des weiteren sind Reaktivgruppen der aliphatischen Reihe zu nennen, wie z.B. der Acryloylrest, Mono-, Di- oder Trichloracryloylreste oder Mono- oder Dibromacryloylreste, z.B. –CO–CH=CH–Cl, $-COCCl=CH_2$, $-CO-CCl=CH-CH_3$, α- oder β-Bromacryloyl-, α,β-Dichlor- oder α,β-Dibrompropionylreste, der Chloracetylrest und der β-Chlorpropionylrest.

Insbesondere bedeutet X in Formel (1) einen Mono-, Di- oder Trihalogenpyrimidinyl-, Acryloyl-, Mono-, Di- oder Trichloracryloyl-, Mono- oder Dibromacryloyl-, α,β-Dichlor- oder α,β-Dibrompropionyl- oder Chloracetylrest, der über ein Brückenglied an den Rest A gebunden ist.

Ganz besonders bevorzugt bedeutet X einen über ein aminogruppenhaltiges Brückenglied an den Rest A gebundenen α,β-Dibrompropionyl-, α-Bromacryloyl- oder 2,6-Difluor-5-chlorpyrimidinylrest.

Das Kation Ka in Formel (1) bedeutet ein Wasserstoff-, Natrium-, Kalium-, Lithium- oder Ammonium-Ion oder das Kation eines organischen Amins wie z.B. des Triäthanolamins.

Besonders bevorzugt sind die Chromkomplexe der Formel

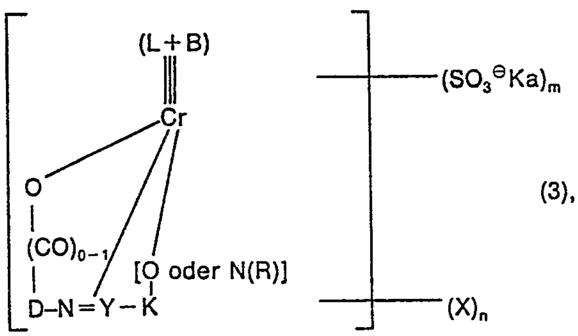

(3),

worin B den Rest von Acetylaceton, Benzoylaceton, Acetessigsäuremethylester oder -äthylester, Benzoylessigsäureäthylester, 2-Hydroxyacetophenon, 2-Hydroxybenzophenon, Dibenzoylmethan, Tropolon, Salicylaldehyd, Malonsäurealdehyd, 2-Buten-3-hydroxycarbonsäureäthylester, 1-Phenyl-3-methyl-4-acetyl- oder -4-benzoylpyrazol-5-on, L einen farblosen monofunktionellen Liganden, D den Rest einer Diazokomponente der Benzol- oder Naphthalinreihe, der die $-(CO)_{0-1}-O-$Gruppe in o-Stellung zur $-N=Y-$Gruppe enthält, Y ein Stickstoffatom oder die –CH-Gruppe, K für den Fall, daß Y ein Stickstoffatom ist, den Rest einer Kupplungskomponente der Benzol- oder Naphthalinreihe oder der 5-Pyrazolon-, 5-Aminopyrazol-, Acetoacetarylid- oder Benzoylessigsäurearylidreihe bedeutet, der den Rest –[O oder N(R)]– in Nachbarstellung zu dem Rest $-N=Y-$ enthält, und wobei R Wasserstoff, gegebenenfalls substituiertes $C_1-C_4$-Alkyl oder gegebenenfalls substituiertes Phenyl ist, oder für den Fall, daß Y die CH-Gruppe ist, K den Rest eines o-Hydroxy-benzaldehyds oder o-Hydroxynaphthaldehyds bedeutet, X α,β-Dibrompropionyl, α-Bromacryloyl, β-Chloracryloyl, 2,6-Difluor-5-chlorpyrimidinyl, 2-Fluor-5-chlor-6-chlormethyl-pyrimidinyl, 2-Fluor-5,6-dichlorpyrimidinyl oder 2-Fluor-5-chlor-6-methylpyrimidinyl, wobei der Rest X über ein aminogruppenhaltiges Brückenglied an D und/oder K gebunden ist, Ka ein Kation, m = 1, 2 oder 3 und n = 1 oder 2 bedeutet, wobei die Gruppe $SO_3^{\ominus}Ka$ an den Rest D und/oder K gebunden ist.

Insbesondere bedeutet Y ein Stickstoffatom.

Der faserreaktive Rest X in den Formeln (1) bis (3) ist vorzugsweise über ein Brückenglied der Formel

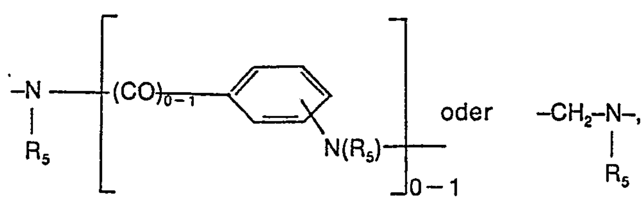

worin $R_5$ Wasserstoff oder $C_{1-4}$-Alkyl wie z.B. Methyl, Äthyl, Propyl oder Butyl ist, gebunden.

Ganz besonders bevorzugt sind die Chromkomplexe der Formel

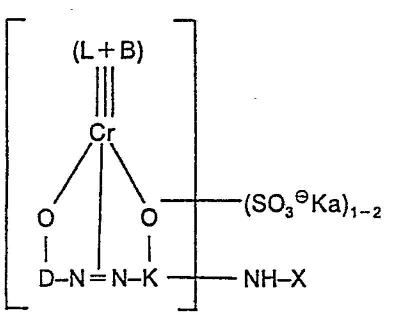

(4),

worin B den Rest von Acetylaceton, Benzoylaceton, Acetessigsäureäthylester, 2-Hydroxyacetophenon, 2-Hydroxybenzophenon, 1-Phenyl-3-methyl-4-acetylpyrazol-5-on, 1-Phenyl-3-methyl-4-benzoylpyrazol-5-on oder Salicylaldehyd, L als farbloser monofunktioneller Ligand Wasser, D ein Benzolrest, der das Sauerstoffatom in o-Stellung zur Azobrücke enthält und durch Sulfo, Nitro, Chlor und den Rest –NH–X substituiert sein kann oder ein Naphthalinrest, der das Sauerstoffatom in o-Stellung zu der Azobrücke enthält und der substituiert sein kann durch Sulfo, Nitro und den Rest –NH–X, K ein Naphthalinrest, der außer durch den Rest –NH–X durch 1 oder 2 Sulfonsäuregruppen substituiert ist, wobei der Rest –NH–X direkt oder über den Phenylaminorest an den Naphthalinkern gebunden ist, ein 1-Phenyl-3-methylpyrazolon-(5)-rest, wobei die Gruppe –NH–X an den Phenylring gebunden ist, oder ein 1-(2′,2″-Disulfostilben)-3-methylpyrazolon-(5)-rest, wobei die Gruppe –NH–X in 4″-Stellung gebunden ist, und X α,β-Dibrompropionyl, α-Bromacryloyl, β-Chloracryloyl, 2,6-Difluor-5-chlorpyrimidinyl, 2-Fluor-5,6-dichlorpyrimidinyl, 2-Fluor-5-chlor-6-chlormethylpyrimidinyl oder 2-Fluor-5-chlor-6-methyl-pyrimidinyl ist und Ka ein Alkalikation, insbesondere $Na^{\oplus}$, bedeutet.

Insbesondere bedeutet B in Formel (4) den Rest von Acetylaceton.

Besonders bevorzugt sind ferner die Chromkomplexe der Formel

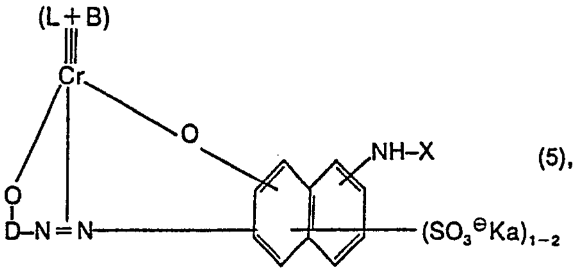

(5),

worin B, D, L und Ka die unter Formel 4 angegebenen Bedeutungen haben, die Azogruppe an den Naphthalinkern in o-Stellung zu dem Rest –O– gebunden ist, X α,β-Dibrompropionyl oder α-Bromacryloyl bedeutet und der Chromkomplex nicht mehr als 1 oder 2 Sulfogruppen enthält.

Gegenstand der Erfindung ist ferner ein Verfahren zur Herstellung der Chromkomplexe der Formel (1), welches dadurch gekennzeichnet ist, daß man eine zweizähnige, komplexierbare, organische Verbindung, die den Rest B enthält, mit einem 1:1-Chromkomplex der Formel

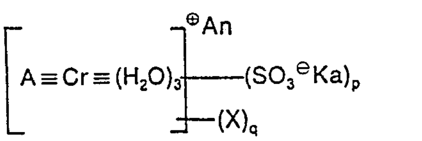

(6),

worin A und Ka die unter Formel (1) angegebenen Bedeutungen haben, und p = 0, 1, 2 oder 3, q = 0, 1 oder 2 und An ein Anion ist, in wäßrigem Medium, gegebenenfalls in Gegenwart eines von Wasser verschiedenen, farblosen monofunktionellen Liganden L, umsetzt und gegebenenfalls anschließend den erhaltenen Chromkomplex mit einer den/die faserreaktiven Rest(e) X einführenden Verbindung(en) umsetzt, wobei falls p = 0 ist der Rest B mindestens eine Sulfogruppe enthält.

Vorzugsweise wird die zweizähnige, komplexbildende, organische Verbindung mit dem 1:1-Chromkomplex der Formel (6) bei einer Temperatur von 60 bis 100 °C und einem pH von 5 bis 11 umgesetzt.

Die Umsetzung mit einer die Reaktivgruppe(n) einführenden Verbindung erfolgt insbesondere bei einer Temperatur von 15 bis 30 °C und einem pH von 5 bis 8.

In der Literatur sind viele metallisierbare Azo- und Azomethinfarbstoffe beschrieben, die den Rest A liefern können, wie z.B. o,o'-Dihydroxy-, o-Carboxy-o'-hydroxy-, o-Hydroxy-o'-aminoazo- oder Azomethinverbindungen, die insbesondere der Formel

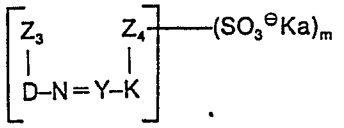

(7)

entsprechen, worin $Z_3$ die Hydroxy-, Carboxy- oder Methoxygruppe, $Z_4$ die Hydroxy- oder HN(R)-Gruppe ist und D, K, Y, Ka und R und m die unter Formel (2) angegebenen Bedeutungen haben, und D und/oder K gegebenenfalls funktionelle Gruppen enthalten, welche zur Einführung der faserreaktiven Gruppe(n) X geeignet sind, wie z.B. Aminogruppen oder in Aminogruppen überführbare Gruppen wie z.B. die Acetylamino- oder die Nitrogruppe. Die Verbindungen der Formel (7), worin Y ein Stickstoffatom ist, werden in an sich bekannter Weise hergestellt, indem man ein Amin der Formel

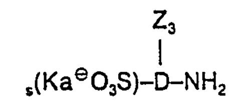

(8)

diazotiert und auf eine Kupplungskomponente der Formel

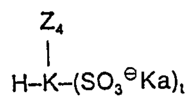

(9)

kuppelt, wobei D, K, $Z_3$, $Z_4$ und Ka die unter Formel 7 angegebenen Bedeutungen haben und s + t = m ist.

Die Diazotierung der Diazokomponente der Formel (8) erfolgt in der Regel durch Einwirkung salpetriger Säure in wäßrig-mineralsaurer Lösung bei tiefer Temperatur, die Kupplung auf die Kupplungskomponente der Formel (9) bei sauren, neutralen bis alkalischen pH-Werten.

Als Amine der Formel (8) kommen z.B. in Betracht:

2-Amino-1-hydroxybenzol, 2-Amino-1-methoxybenzol, Anthranilsäure, 4- oder 5-Sulfonamidoanthranilsäure, 3- oder 5-Chloranthranilsäure, 4-Chlor- und 4,6-Dichlor-2-amino-1-hydroxybenzol, 4- oder 5- oder 6-Nitro-2-amino-1-hydroxybenzol, 4-Chlor- und 4-Methyl- und 4-Acetylamino-6-nitro-2-amino-1-hydroxybenzol, 6-Acetylamino- und 6-Chlor-4-nitro-2-amino-1-hydroxybenzol, 4-Cyan-2-amino-1-hydroxybenzol, 4-Methoxy-2-amino-1-hydroxybenzol, 2-Amino-1-hydroxybenzol-5-methyl- und 5-benzylsulfon, 2-Amino-1-hydroxybenzol-4-methyl-, -äthyl-, -chlormethyl- und -butylsulfon, 6-Chlor-, 5-Nitro- und 6-Nitro-2-amino-1-hydroxybenzol-4-methylsulfon, 2-Amino-1-hydroxybenzol-4- oder -5-sulfamid, -sulf-N-methyl- und sulf-N-β-hydroxyäthylamid, 2-Amino-1-methoxybenzol-4-sulfanilid, 4-Methoxy-5-chlor-2-amino-1-hydroxybenzol, 4-Methyl-2-amino-1-hydroxybenzol, 4-Chlor-5-nitro-2-amino-1-hydroxybenzol, 5-Nitro-4-methyl-2-amino-1-hydroxybenzol, 5-Nitro-4-methoxy-2-amino-1-hydroxybenzol, 3,4,6-Trichlor-2-amino-1-hydroxybenzol, 6-Acetylamino-4-chlor-2-amino-1-hydroxybenzol, 4,6-Dinitro-2-amino-1-hydroxybenzol, 4-Nitro-2-amino-1-hydroxybenzol-5- oder -6-sulfonsäureamid, 4- oder 5-Chloranisidin, 4- oder 5-Nitroanisidin, 2-Methoxy-5-methylanilin, 2,5-Dimethoxyanilin, 2-Anisidin-4- oder -5-β-hydroxyäthylsulfon, 4-Methyl-6-sulfo-2-amino-1-hydroxybenzol, 2-Amino-4-sulfo-1-hydroxybenzol, 4-Chlor-6-sulfo-2-amino-1-hydroxybenzol, 6-Chlor-4-sulfo-2-amino-1-hydroxybenzol, 4-Chlor-5-nitro-2-amino-1-hydroxybenzol, 5-Nitro-4-sulfo-2-amino-1-hydroxybenzol, 4-Nitro-6-sulfo-2-amino-1-hydroxybenzol, 6-Nitro-4-sulfo-2-amino-1-hydroxybenzol, 4-Acetylamino-2-amino-1-hydroxybenzol, 4-Acetylamino-6-sulfo-2-amino-1-hydroxybenzol, 5-Acetylamino-2-amino-1-hydroxybenzol, 6-Acetylamino-4-sulfo-2-amino-1-hydroxybenzol, 4-Chlor-2-amino-1-hydroxybenzol-5-sulfamid, 2-Amino-1-hydroxybenzol-4-(N-2′-carboxyphenyl)sulfamid, 1-Amino-2-hydroxy-4-sulfonaphthalin, 1-Amino-2-hydroxy-4-sulfo-6-nitronaphthalin, 1-Amino-2-hydroxy-4-sulfo-6-acetamidonaphthalin, 1-Amino-2-hydroxy-4,8-disulfonaphthalin, 1-Amino-2-hydroxy-6-sulfonaphthalin, 1-Amino-2-hydroxy-7-sulfonaphthalin, 1-Amino-2-hydroxy-8-sulfonaphthalin, 2-Amino-1-hydroxy-4-sulfonaphthalin, 2-Amino-1-hydroxy-6-sulfonaphthalin, 2-Amino-1-hydroxy-4,8-disulfonaphthalin.

Die Kupplungskomponenten der Formel (9) können sich z.B. von folgenden Gruppen von Kupplungskomponenten ableiten:

– In o-Stellung zur OH-Gruppe kuppelnde Naphthole, die gegebenenfalls mit Halogen, insbesondere Chlor, Amino, Acylamino, Acyl, $C_{1-4}$-Alkoxy, Sulfonamido-, N-mono- oder N,N-disubstituierten Sulfonamidogruppen, Sulfo- und Sulfongruppen substituiert sind.

– In o-Stellung zur Aminogruppe kuppelnde Naphthylamine, die gegebenenfalls mit Halogen, insbesondere Brom, $C_{1-4}$-Alkyl, $C_{1-4}$-Alkoxy, Sulfonamido-, mono- oder disubstituierten Sulfonamido-, Sulfo- oder Sulfongruppen substituiert sind.

– 5-Pyrazolone und 5-Aminopyrazole, die in 1-Stellung einen gegebenenfalls mit Halogen, wie z.B. Chlor, Nitro, $C_{1-4}$-Alkyl- und Alkoxygruppen, Sulfonamido-, N-alkylierten Sulfonamidogruppen, Sulfo oder Sulfongruppen und insbesondere Aminogruppen substituierten Phenyl- oder Naphthylrest besitzen.

– 2,6-Dihydroxy-3-cyano- oder -3-carbonamido-4-alkylpyridine und 6-Hydroxy-2-pyridone, die in 1-Stellung durch gegebenenfalls substituiertes $C_{1-4}$-Alkyl, z.B. Methyl, Isopropyl, β-Hydroxyäthyl, β-Aminoäthyl, γ-Isopropoxypropyl oder durch $-NH_2$ oder eine substituierte Aminogruppe wie z.B. Dimethylamino oder Diäthylamino substituiert sind, in 3-Stellung eine Cyano- oder Carbonamidogruppe und in 4-Stellung eine $C_{1-4}$-Alkylgruppe, insbesondere Methyl, tragen.

– Acetessigsäureanilide und Benzoylessigsäureanilide, die im Anilidkern gegebenenfalls mit $C_{1-4}$-Alkyl-, Alkoxy-, Alkylsulfonylgruppen, $C_{1-4}$-Hydroxyalkyl-, Alkoxyalkyl- oder Cyanalkylsulfonylgruppen, Sulfonamido-, N-alkylierten Sulfonamidogruppen, Sulfo und Halogen sowie Nitro-, Amino- oder Acetylaminogruppen substituiert sein können.

– Phenole, die mit niedrigmolekularen Acylaminogruppen und/oder mit 1 bis 5 Kohlenstoffatome enthaltenden Alkylgruppen substituiert sind und in o-Stellung kuppeln, sowie Hydroxyphenole, insbesondere Resorcin.

Beispiele solcher Kupplungskomponente sind: 2-Naphthol, 1-Naphthol, 1-Hydroxynaphthalin-4-, 5- oder -8-sulfonsäure oder -3,5- oder -4,8-disulfonsäure, 1,3- oder 1,5-Dihydroxynaphthalin, 1-Hydroxy-7-aminonaphthalin-3-sulfonsäure, 2-Naphthol-6-sulfonamid, 1-Hydroxy-7-amino- oder -7-N-methyl- oder N-acetylaminonaphthalin-3-sulfonsäure, 2-Naphthol-6-β-hydroxyäthyl-sulfon, 1-Hydroxy-6-amino- oder -6-N-Methyl- oder -6-N-Acetylamino-naphthalin-3-sulfonsäure, 1-Hydroxy-7-aminonaphthalin-3,6-disulfonsäure, 1-Hydroxy-6-aminonaphthalin-3,5-disulfonsäure, 1-Acetylamino-7-naphthol, 1-Hydroxy-6-N-(4′-aminophenyl)-aminonaphthalin-3-sulfonsäure, 1-Hydroxy-5-aminonaphthalin-3-sulfonsäure, 1-Propionylamino-7-naphthol, 2- Hydroxyl-6-aminonaphthalin-4-sulfonsäure, 2-Hydroxy-8-amino-naphthalin-6-sulfonsäure, 1-Carbomethoxyamino-7-naphthol, 1-Hydroxy-8-aminonaphthalin-5-sulfonsäure, 1-Carboäthoxyamino-7-naphthol, 1-Hydroxy-8-aminonaphthalin-5,7-disulfonsäure, 1-Carbopropoxy-amino-7-naphthol, 1-Hydroxy-8-aminonaphthalin-3-sulfonsäure, 1-Dimethylaminosulfonyl-amino-7-naphthol, 6- oder 8-Acetylamino-2-naphthol, 1-Hydroxy-8-amino- oder -8-acetylamino-naphthalin-, 3,5- oder -3,6-disulfonsäure, 4-Acetylamino-2-naphthol, 2-Hydroxy-5-aminonaphthalin-4,7-disulfonsäure, 4-Methoxy-1-naphthol, 4-Acetylamino-1-naphthol, 1-Naphthol-3-, -4-, -5- oder -8-sulfonamid, 2-Naphthol-3-, -4-, -5-, -6-, -7- oder -8-sulfonamid, 5,8-Dichlor-1-naphthol, 5-Chlor-1-naphthol, 2-Naphthylamin, 2-Naphthylamin-1- oder -6-sulfonsäure, 2-Aminonaphthalin-5-, -6- oder -7-sulfonamid, 2-Aminonaphthalin-6-sulfonsäure-N-methyl-, -äthyl-, -isopropyl-, -β-oxyäthyl- oder -methoxypropylamid, 2-Aminonaphthalin-6-sulfanilid, 2-Aminonaphthalin-6-sulfonsäure-N-methylanilid, 1-Aminonaphthalin-3-, -4- oder -5-sulfonamid, 1-Aminonaphthalin-5-methyl- oder -äthylsulfon, 5,8-Dichlor-1-aminonaphthalin, 2-Phenylaminonaphthalin, 2-N-Methylaminonaphthalin, 2-N-Äthylaminonaphthalin, 2-Phenylaminonaphthalin-5-, -6- oder -7-sulfonamid, 2-(3′-Chlorphenylamino)-naphthalin-5-, -6- oder -7-sulfonamid, 6-Methyl-2-aminonaphthalin, 6-Brom-2-aminonaphthalin, 6-Methoxy-2-aminonaphthalin, 1,3-Dimethylpyrazolon, 3-Methyl-5-pyrazolon, 1-Phenyl-3-methyl-5-pyrazolon, 1-Phenyl-3-carbonamido-5-pyrazolon, 1-(2′-, 3′- oder 4′-Methylphenyl)-3-methyl-5-pyrazolon, 1-[3′- oder 4′-(β-Hydroxyäthylsulfonyl)-phenyl]-3-methyl-5-pyrazolon, 1-(2′-Methoxyphenyl)-3-methyl-5-pyrazolon, 1-(2′-, 3′- oder 4′-Chlorphenyl)-3-methyl-5-pyrazolon, 1-(2′-, 3′- oder 4′-Nitrophenyl)-3-methyl-5-pyrazolon, 1-(2′,5′- oder 3′,4′-Dichlorphenyl)-3-methyl-5-pyrazolon, 1-(2′-,

3'- oder 4'-Sulfamoylphenyl)-3-methyl-5-pyrazolon, 1-(2'-, 3'- oder 4'-Methylsulfonylphenyl)-3-methyl-5-pyrazolon, 2,6-Dihydroxy-3-cyano-4-methylpyridin, 1-Methyl-3-cyano-4-äthyl-6-hydroxypyridon-(2), 1-Amino-3-cyano-4-methyl-6-hydroxypyridon-(2), 1-Phenyl-3-carbonamido-4-methyl-6-hydroxypyridon-(2), Acetoacetanilid, Acetoacet-o-, -m- oder -p-sulfoanilid, Acetoacet-4-(β-hydroxyäthylsulfonyl)-anilid, Acetoacet-o-anisidid, Acetoacet-naphthylamid, Acetoacet-o-toluidid, Acetoacet-o-chloranilid, Acetoacet-m-oder -p-chloranilid, Acetoacetanilid-3- oder -4-sulfonamid, Acetoacet-3- oder -4-aminoanilid, Acetoacet-m-xylidid, Benzoylessigsäureanilid, 4-Methylphenol, 3-Dialkylaminophenol, besonders 3-Dimethylamino- und 3-Diäthylaminophenol, 4-t-Butylphenol, 4-t-Amylphenol, 2- oder 3-Acetylamino-4-methylphenol, 2-Methoxycarbonylamino-4-methylphenol, 2-Äthoxycarbonylamino-4-methylphenol, 3,4-Dimethylphenol und 2,4-Dimethylphenol, 3-Amino-4-sulfophenol, 1-(4'-Aminophenyl)-3-methyl-5-pyrazolon, 1-(2'-, 3'- oder 4'-Sulfophenyl)-3-methyl-5-pyrazolon, 1-(2'-Chlor-4'-oder 5'-sulfophenyl)-3-methyl-5-pyrazolon, 1-(2'-Methyl-6'-chlorphenyl)-3-methyl-5-pyrazolon, 1-(2'-Methyl-4'-sulfophenyl)-3-methyl-5-pyrazolon, 1-(2'-, 3'- oder 4'-Chlor- oder Methyl- oder Sulfophenyl)-3-carboxy-5-pyrazolon, 1-[5'-Sulfonaphthyl(2')]-3-methyl-5-pyrazolon, 1-[4''-Amino-2',2''-disulfonstilben(4')]-3-methyl-5-pyrazolon, 1-Äthyl-3-cyano-4-methyl-6-hydroxypyridon-(2), 1-Äthyl-3-sulfomethyl-4-methyl-6-hydroxypyridon-(2), 2,6-Dihydroxy-4-methyl-3-sulfomethylpyridin, 2,4,6-Trihydroxypyrimidin, 1-Methyl-4-hydroxychinol-2-on.

Für die Herstellung der Azomethinfarbstoffe der Formel (7) werden in bekannter Weise die oben genannten aromatischen Amine der Formel (8) mit o-Hydroxybenzaldehyden oder o-Hydroxynaphthaldehyden kondensiert.

Geeignete Aldehyde sind beispielsweise: 2-Hydroxybenzaldehyd, 3- und 5-Methyl-2-hydroxybenzaldehyd, 3,5- und 3,6-Dimethyl-2-hydroxybenzaldehyd, 5-Butyl-2-hydroxybenzaldehyd, 5-Chlor- oder -Brom-2-hydroxybenzaldehyd, 3- und 4-Chlor-2-hydroxybenzaldehyd, 3,5-Dichlor-2-hydroxybenzaldehyd, 3-Chlor-5-methyl-2-hydroxybenzaldehyd, 3-Methyl-5-chlor-2-hydroxybenzaldehyd, 3- und 4- und 5-Nitro-2-hydroxybenzaldehyd, 3,5-Dinitro- und 4-Chlor-5-nitro-2-hydroxybenzaldehyd, 4-Methoxy-2-hydroxybenzaldehyd, 1-Hydroxy-2-naphthaldehyd und dessen in 4-Stellung chlorierter Abkömmling; und 2-Hydroxy-1-naphthaldehyd.

Bevorzugt sind diejenigen erfindungsgemäßen Chromkomplexe, worin Y ein Stickstoffatom und K der Rest einer Kupplungskomponente der Naphthalinreihe ist, insbesondere der Rest einer Aminonaphthol-mono- oder disulfonsäure.

Gegebenenfalls kann eine freie Aminogruppe im Rest D und/oder K nach der Kupplung mit einem Acylierungs- oder Alkylierungsmittel in eine Acylamino- oder Alkylaminogruppe umgewandelt werden, und ebenso kann eine Hydroxygruppe im Rest D und/oder K durch Alkylierung in eine Alkoxygruppe übergeführt werden.

Eine Verfahrensvariante zur Herstellung des 1:1-Chromkomplexazomethinfarbstoffes der Formel (6) ist dadurch gekennzeichnet, daß man den 1:1-Chromkomplex der Formel (6) statt mit dem Azomethin der Formel (7) auch mit einem Gemisch des Amins der Formel (8) und einem o-Hydroxybenzaldehyd oder einem o-Hydroxynaphthaldehyd herstellen kann.

Die Amine der Formel (8), die Kupplungskomponenten der Formel (9) und die o-Hydroxyaldehyde können in Aminogruppen überführbare Reste, wie z.B. die Acetylamino- und die Nitrogruppe, enthalten. Beispielsweise kann eine Acetylaminogruppe durch Verseifen und eine Nitrogruppe durch Reduktion in eine Aminogruppe überführt werden, vorteilhafterweise im Anschluß an die Herstellung der Farbstoffe der Formel (7) oder die Herstellung des 1:1-Chromkomplexes der Formel (6).

Die Herstellung der 1:1-Chromkomplexe geschieht nach an sich bekannten Methoden. Man stellt z.B. den 1:1-Chromkomplex der Verbindung der Formel (6) her, indem man die metallfreie Verbindung in saurem Medium mit einem Salz des dreiwertigen Chroms wie Chromchlorid, Chromfluorid oder Chromsulfat umsetzt, gegebenenfalls in Anwesenheit von löslichkeitsfördernden oder die Chromierung beschleunigenden Mitteln, wie z.B. Alkoholen oder Hydroxycarbonsäuren. Anschließend läßt man den 1:1-Komplex bei pH-Werten von 5–11 mit einer Verbindung, welche den Rest B einführt, reagieren.

Als den Rest B einführende Verbindungen kommen z.B. insbesondere in Betracht: Acetylaceton, Benzoylaceton, Acetessigsäure-methylester oder -äthylester, Benzoylessigsäureäthylester, 2-Hydroxyacetophenon, 2-Hydroxybenzophenon, Dibenzoylmethan, Dibenzoyl, Tropolon, Salicylaldehyd, Malonsäuredialdehyd, 2-Buten-3-hydroxycarbonsäureäthylester, 1-Phenyl-3-methyl-4-acetyl- oder -4-benzoylpyrazol-5-on, 2-Nitrosophenol, 2-Nitrosonaphthol, 2-Hydroxy-1-naphthaldehyd, 1,3-Diphenylpropan-1,3-dion.

Erfolgt die Umsetzung des 1:1-Chromkomplexes der Formel (6) mit der den Rest B einführenden organischen Verbindung gegebenenfalls in Gegenwart eines der weiter oben angegebenen von Wasser verschiedenen, farblosen, monofunktionellen Liganden L, so erhält man einen Chromkomplex der Formel

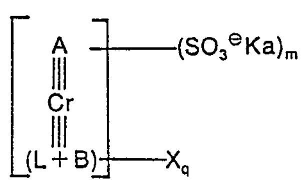

(10),

worin A, B, L, Ka, X und m die unter Formel (1) angegebenen Bedeutungen haben und q = 0, 1 oder 2 ist.

Falls die Reaktivgruppe(n) X in dem Chromkomplex der Formel (1) an den Rest A gebunden ist, erfolgt die Einführung der Reaktivgruppe(n) zweckmäßigerweise nach Herstellung des 1:1-Chromkomplexes der Formel (6) oder vorzugsweise im Anschluß an die Umsetzung des 1:1-Chromkomplexes der Formel (6) mit der den Rest B einführenden organischen Verbindung. Falls die Reaktivgruppe(n) X in dem Chromkomplex der Formel (1) an den Rest B gebunden ist, erfolgt deren Einführung vorzugsweise im Anschluß an die Umsetzung mit dem 1:1-Chromkomplex der Formel (6).

Die Einführung der faserreaktiven Gruppe(n) X in den 1:1-Chromkomplex der Formel (6) oder in den Chromkomplex der Formel (10) erfolgt in an sich bekannter Weise dadurch, daß man diese Chromkomplexe mit einem oder zwei den (die) Rest(e) X einführenden oder bildenden Mittel(n) umsetzt, wobei die Reste A und/oder B in den Formeln (6) und (10) funktionelle Gruppen, welche zur Einführung der faserreaktiven Gruppe(n) X geeignet sind, enthalten müssen. Solche zur Einführung der Reste X geeignete Gruppen sind z.B. gegebenenfalls monoalkylierte Aminogruppen, wie beispielsweise $-NH_2$, $-N(CH_3)H$ oder $-N(C_2H_5)H$.

Die Einführung der Reaktivgruppe(n), die über eine Oxy-, Thio- oder vorzugsweise Aminogruppe gebunden ist (sind), erfolgt dadurch, daß man die Chromkomplexe der Formeln (6) und (10) mit einem (oder zwei) Acylierungsmittel(n), welche(s) einen oder zwei gegebenenfalls voneinander verschiedene Rest(e) X einführt (einführen), umsetzt.

Gegenstand der Erfindung ist ferner ein Verfahren zum Färben textiler Materialien mit Chromkomplexen, welches dadurch gekennzeichnet ist, daß man eine wäßrige Flotte, welche eine den Rest B einführende Verbindung und den 1:1-Chromkomplex der Formel

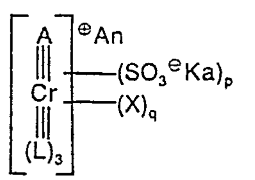 (11),

worin A, L und X die unter Formel (1) angegebenen Bedeutungen haben, und p = 0 bis 3, q = 0 bis 2 und An ein Anion ist, das textile Material und gegebenenfalls weitere Zusätze enthält, verwendet, die Flotte gegebenenfalls stufenweise auf 100 °C erhitzt, anschließend alkalisch stellt und die Färbung fertigstellt, wobei, falls p = 0 ist, der Rest B mindestens eine Sulfogruppe enthält und, falls q = 0 ist, der Rest B mindestens einen faserreaktiven Rest X enthält.

Insbesondere setzt man die den Rest B einführende Verbindung und den 1:1-Chromkomplex der Formel (11) in dem molaren Verhältnis 2:1 bis vorzugsweise 1:1 ein.

Eine bevorzugte Verfahrensvariante ist dadurch gekennzeichnet, daß man die Färbeflotte, welche die oben angegebenen Komponenten enthält, innerhalb von 10 bis 45 Minuten auf 60 bis 80 °C erwärmt, diese Flottentemperatur für 10 bis 45 Minuten beibehält und anschließend innerhalb von 10 bis 30 Minuten auf 100 °C aufheizt, diese Temperatur für 30 bis 90 Minuten beibehält, auf 85 °C abkühlt, den pH der Flotte auf 8 bis 9 einstellt und während weiteren 10 bis 30 Minuten bei 85 °C nachbehandelt.

Als weitere Zusätze kann die Flotte z.B. eine anorganische oder organische Säure, insbesondere Essigsäure, ein Alkali- oder Ammoniumsalz, insbesondere Ammoniumsulfat, und gegebenenfalls ein Egalisiermittel enthalten.

Der Chromkomplex der Formel (11) wird, wie weiter oben beschrieben, durch Umsetzung eines Azo- oder Azomethinfarbstoffes, insbesondere eines solchen Farbstoffes der Formel (2), gegebenenfalls in Gegenwart eines von Wasser verschiedenen Liganden L, mit einem der genannten Chromierungsmittel erhalten, wobei die Einführung der faserreaktiven Reste an einer beliebigen Stelle des Verfahrens erfolgen kann, vorzugsweise nach der Herstellung des 1:1-Chromkomplexes.

In dem erfindungsgemäßen Verfahren verwendet man insbesondere 1:1-Chromkomplexe der Formel

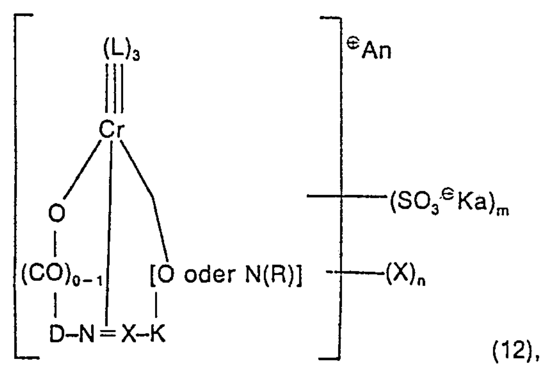 (12),

worin D, K, L, R, Ka, X, m und n die unter Formel (3) angegebenen Bedeutungen haben und An ein Anion ist; vorzugsweise verwendet man Chromkomplexe der Formel

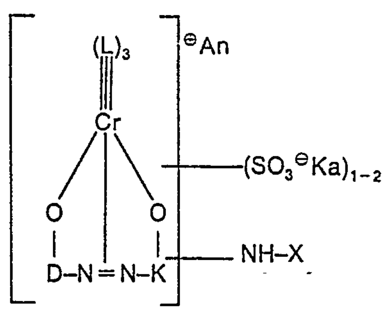 (13),

worin D, K, L, Ka und X die unter Formel (4) angegebenen Bedeutungen haben und An ein Anion ist.

In dem erfindungsgemäßen Verfahren kommen als den Rest B einführende Verbindungen sämtliche der weiter oben genannten Verbindungen in Betracht, wobei in dem Rest B enthaltene acylierbare Aminogruppen, die nicht an der Komplexbildung beteiligt sind, vorgängig mit einem den faserreaktiven Rest X einführenden Acylierungsmittel umgesetzt sein können, insbesondere kommen für die den Rest B einführende Verbindungen, die unter den Formeln (3) und (4) genannten in Betracht.

Gegebenenfalls kann das erfindungsgemäße Verfahren in Gegenwart einer von Wasser verschiedenen farblosen monofunktionellen Verbindung L ausgeführt werden, wobei die vorgängig genannten Verbindungen in Betracht kommen.

Insbesondere verwendet man in dem erfindungsgemäßen Verfahren Acetylaceton als den Rest B einführende Verbindung und den 1:1-Chromkomplex der Formel

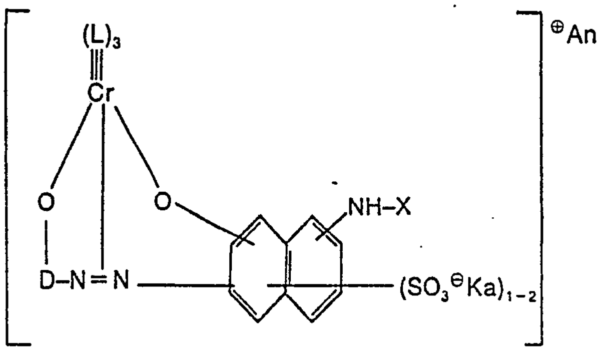

(14),

worin D, L, Ka und X die unter Formel (5) angegebenen Bedeutungen haben und An ein Anion ist.

Nach dem erfindungsgemäßen Verfahren wird somit der Chromkomplex der Formel (1) während des Färbens gebildet, wobei die gleichen färberischen Vorteile erhalten werden wie mit den in Substanz hergestellten, isolierten Farbstoffen der Formel (1).

Die erfindungsgemäßen Chromkomplexe der Formel (1) sowie die in dem erfindungsgemäßen Färbeverfahren hergestellten Chromkomplexe eignen sich zum Färben von stickstoffgruppenhaltigen oder hydroxygruppenhaltigen Materialien, wie z.B. Wolle, Seide, Leder, synthetische Polyamide und Baumwolle. Man erhält egale Färbungen in gelben, braunen, orangen, roten, blauen, grauen, grünen und schwarzen Tönen mit guten Allgemeinechtheiten, insbesondere sehr guter Reib-, Naß-, Naßreib- und Lichtechtheit. Ferner sind die erfindungsgemäßen Farbstoffe sehr gut mit faserreaktiven Säurefarbstoffen kombinierbar. Das oben genannte Textilmaterial kann in den verschiedensten Verarbeitungsformen vorliegen, wie z.B. als Faser, Garn, Gewebe oder Gewirke.

Aus der FR-A-2 333 029 sind ähnliche Farbstoffe bekannt, die jedoch nicht alle guten Eigenschaften der erfindungsgemäßen Farbstoffe aufweisen. Aus der FR-A-1 310 178 sind Chromkomplexfarbstoffe bekannt, die frei von Sulfonsäuregruppen sind; und aus der DE-C-933 622 ist ein Verfahren zur Herstellung von Chromkomplexfarbstoffen bekannt, die keine faserreaktive Gruppe enthalten.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1

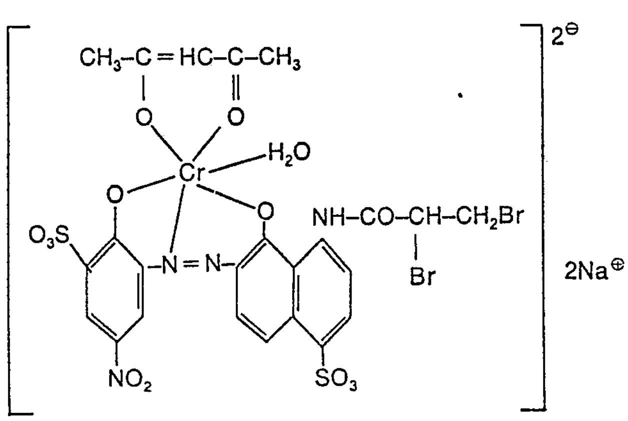

48,44 T des Monoazofarbstoffes, der durch Diazotierung von 4-Nitro-6-sulfo-2-aminophenol und Kupplung der Diazoverbindung auf 1-Naphthol-8-amino-5-sulfonsäure erhalten wird, werden in bekannter Weise zum 1:1-Chromkomplex umgesetzt. Das Produkt wird in 400 T Wasser suspendiert und 10,0 T Acetylaceton werden zugefügt. Unter Erwärmen auf 75–80° wird der pH mit NaOH(2N) auf 7–7,3 gehalten, Lösung tritt ein. Unter ständiger pH-Kontrolle wird 1 h bei 75–80° gerührt.

Nach beendeter Anlagerung wird auf 20–25° gekühlt. 34 T Dibrom-propionyl-chlorid, mit 5 ml Aceton verdünnt, werden in 20–30 Min. bei 20–25° zugetropft, der pH wird mit NaOH(2N) auf 6,5–7 gehalten. Nach zweistündigem Rühren unter pH-Kontrolle wird der erhaltene reaktive Chrom-Komplex klärfiltriert und die Lösung wird eingedampft. Der erhaltene Farbstoff färbt Wolle nach dem im Färbebeispiel 2 angegebenen Verfahren in marineblauen Tönen mit ausgezeichneten Echtheiten.

Beispiel 2

53,9 T des 1:1-Chromkomplexes des Monoazofarbstoffes, der durch alkalische Kupplung von 1-Diazo-2-naphthol-4-sulfonsäure auf 2-Amino-5-naphthol-7-sulfonsäure erhalten wird, werden in 500 Teilen Wasser mit verdünnter Natronlauge bei pH 7 gelöst. Nach Zugabe von 10,0 T Acetylaceton wird der pH-Wert mit verdünnter Natronlauge auf 6,5 eingestellt und das Reaktionsgemisch 30 Min. bei 90–95 °C gerührt. Die Farbstofflösung wird auf 50 °C gekühlt und mit 15 Teilen Natriumbicarbonat versetzt. Nach 10-minütigem Rühren wird mit 200 Teilen Eis auf 10–15 °C gekühlt und in ca. 1 Stunde 30 Teile 1,2-Dibrompropionylchlorid zugetropft und weitere 2–3 Stunden bei Raumtemperatur nachgerührt. Der gebildete, gelöste Farbstoff der Formel

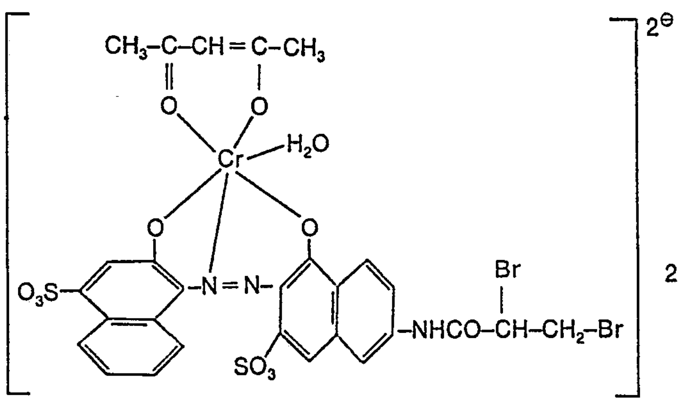

2 Na$^{\oplus}$

wird zur Trockne eingedampft. Der in Form eines sehr gut wasserlöslichen, dunklen Pulvers erhaltene Farbstoff färbt Wolle nach dem Verfahren des Färbebeispiels 2 in dunkelblauen Tönen mit ausgezeichneten Echtheitseigenschaften.

Weitere Farbstoffe mit ähnlichen Eigenschaften erhält man in analoger Weise durch Umsetzen der 1:1-Chromkomplexe der in der folgenden Tabelle I in Kolonne I angegebenen Monoazoverbindungen mit den in Kolonne II aufgeführten farblosen Verbindungen und anschließender Acylierung des erhaltenen 1:2-Chromkomplexes mit 1,2-Dibrompropionylchlorid. Diese färben Wolle in den in Kolonne III angegebenen Nuancen.

| Beispiel | I | II | III |
|---|---|---|---|
| 3 | 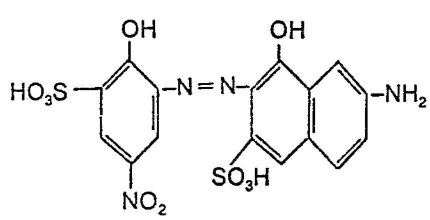 | Acetylaceton | rotstichig-grau |
| 4 | 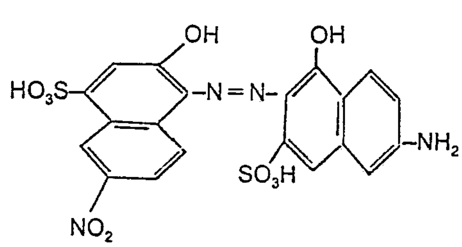 | Acetessigsäureäthylester | grüngrau |

| Beispiel | I | II | III |
|---|---|---|---|
| 5 | 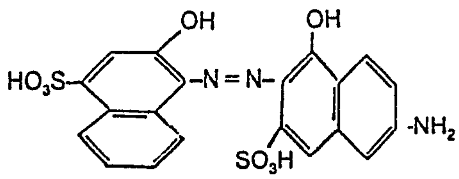 | dito | blau |
| 6 | 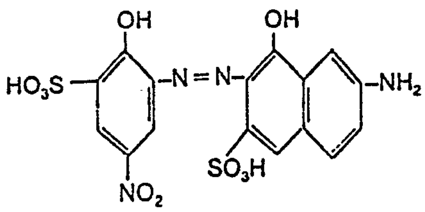 | Benzoylaceton | rotstichig-grau |
| 7 | dito | 2-Hydroxyacetophenon | grüngrau |
| 8 | dito | Acetessigsäureäthylester | grau |
| 9 | 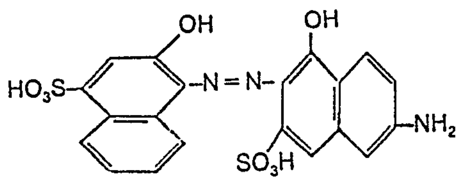 | Benzoylaceton | blau |
| 10 | dito | 2-Hydroxyacetophenon | blau |
| 11 | 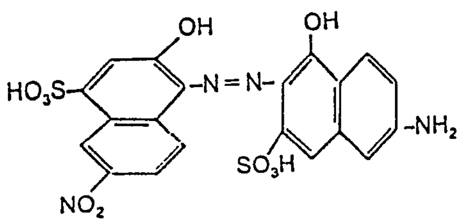 | Benzoylaceton | grau |
| 12 | dito | 2-Hydroxyacetophenon | grau |
| 13 | dito | Acetylaceton | grau |
| 14 | 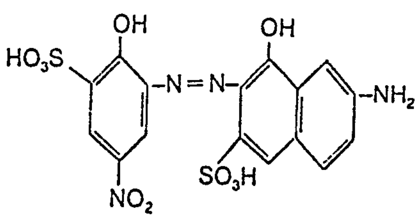 | Benzoylaceton | rotst. grau |
| 15 | 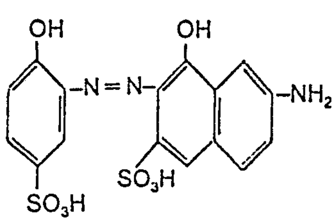 | 1-Phenyl-3-methyl-4-acetyl-pyrazol-5-on | violettgrau |

| Beispiel | I | II | III |
|---|---|---|---|
| 16 | 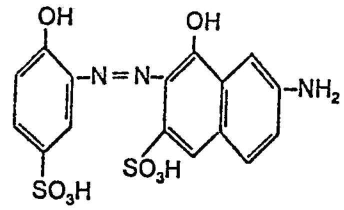 | Acetessigsäureäthylester | violett |
| 17 | dito | Acetylaceton | violett |
| 18 | dito | Benzoylaceton | violett |
| 19 | 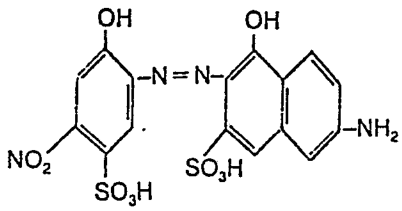 | Acetylaceton | grau |
| 20 | 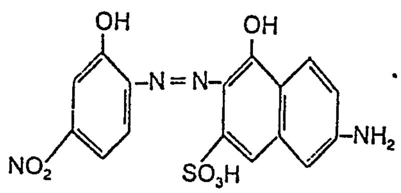 | Acetylaceton | blaugrau |
| 21 | 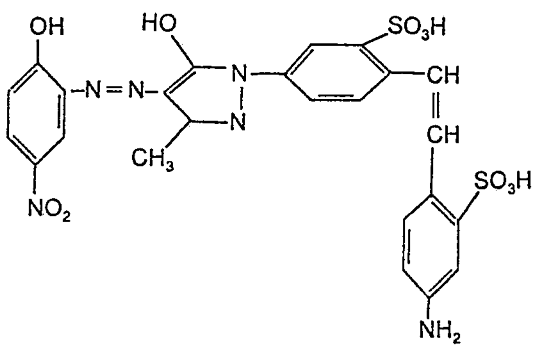 | Acetylaceton | orange |
| 22 | dito | Benzoylaceton | orange |
| 23 | dito | 2-Hydroxyacetophenon | orange |
| 24 | dito | 1-Phenyl-3-methyl-4-benzoylpyrazol-5-on | orange |
| 25 | 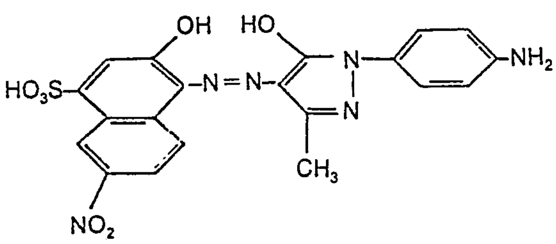 | Acetylaceton | rot |
| 26 | dito | Benzoylaceton | rot |
| 27 | dito | Acetessigsäureäthylester | rot |

| Beispiel | I | II | III |
|---|---|---|---|
| 28 | 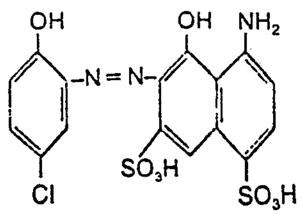 | Acetylaceton | marine-blau |
| 29 | dito | Benzoylaceton | marine-blau |
| 30 | dito | Acetessigsäureäthylester | blaugrau |
| 31 | dito | 2-Hydroxyacetophenon | blaugrau |
| 32 | 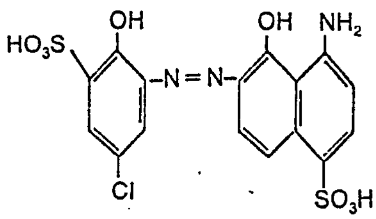 | Acetylaceton | marine-blau |
| 33 | dito | Benzoylaceton | marine-blau |
| 34 | 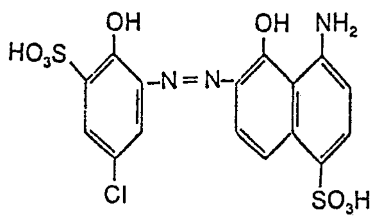 | 2-Hydroxyacetophenon | marine-blau |
| 35 | dito | Acetessigsäureäthylester | blaugrau |
| 36 | dito | 1-Phenyl-3-methyl-4-acetyl-pyrazol-5-on | grau |
| 37 | 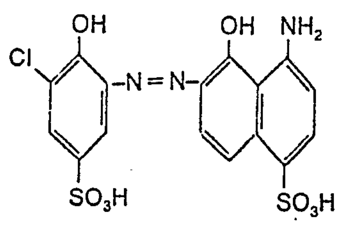 | Acetylaceton | blaugrau |
| 38 | dito | Benzoylaceton | blaugrau |
| 39 | dito | 2-Hydroxyacetophenon | grau |
| 40 | dito | Acetessigsäureäthylester | grau |
| 41 | 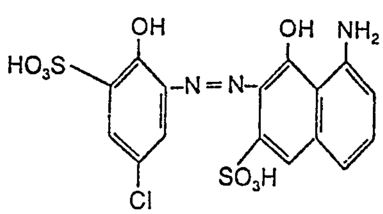 | Acetylaceton | marine-blau |
| 42 | dito | Benzoylaceton | marine-blau |
| 43 | dito | 2-Hydroxyacetophenon | blau |
| 44 | dito | Acetessigsäureäthylester | blau |

| Beispiel | I | II | III |
|---|---|---|---|
| 45 | 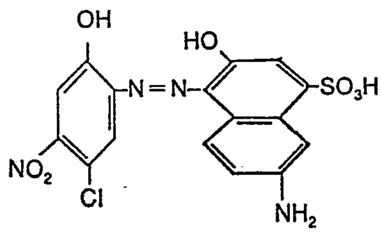 | Acetylaceton | grau |
| 46 | 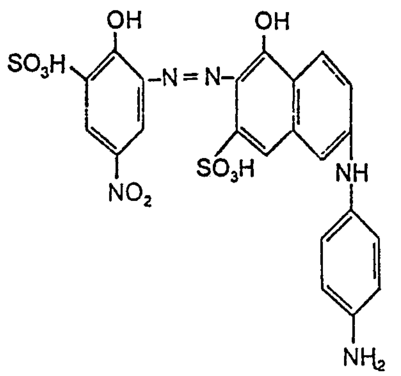 | Acetylaceton | grau |
| 47 | dito | 1-Phenyl-3-methyl-4-acetyl-pyrazol-5-on | olivegrau |
| 48 | 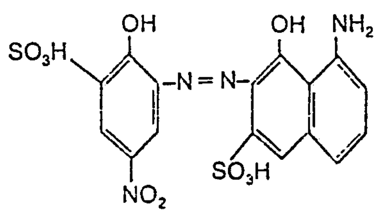 | Acetylaceton | grau |
| 49 | dito | Benzoylaceton | grau |
| 50 | dito | 2-Hydroxyacetophenon | grau |
| 51 | dito | Acetessigsäureäthylester | grau |
| 52 | 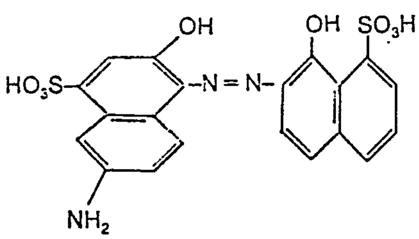 | Acetylaceton | grau |
| 53 | dito | Benzoylaceton | grau |
| 54 | dito | 2-Hydroxyacetophenon | grau |
| 55 | dito | Acetessigsäureäthylester | grau |
| 56 | 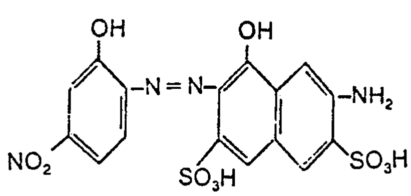 | Acetylaceton | grau |
| 57 | dito | Benzoylaceton | grau |
| 58 | dito | 2-Hydroxyacetophenon | grau |
| 59 | dito | Acetessigsäureäthylester | grau |

| Beispiel | I | II | III |
|---|---|---|---|
| 60 | 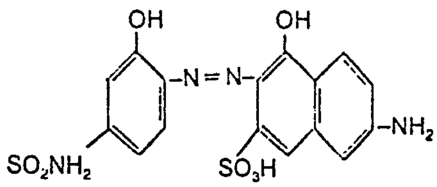 | Acetylaceton | grau |
| 61 | 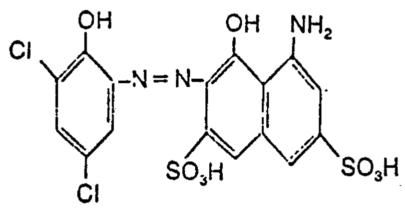 | Benzoylaceton | marine-blau |
| 62 | dito | Acetylaceton | rotstichiges marine-blau |
| 63 | 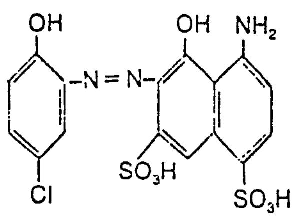 | Salicylaldehyd | marine-blau |
| 64 | 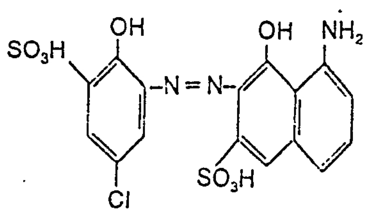 | Salicylaldehyd | marine-blau |
| 65 | 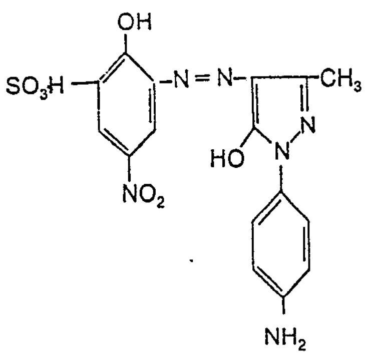 | Benzoylaceton | orange |

Weitere Farbstoffe mit ähnlichen Eigenschaften erhält man in analoger Weise durch Umsetzen der 1:1-Chromkomplexe der in der folgenden Tabelle II in Kolonne I angegebenen Aminomonoazoverbindungen, welche mit den in Kolonne II angegebenen Reaktivgruppen umgesetzt sind, mit den in Kolonne III aufgeführten farblosen Verbindungen. Die neuen Farbstoffe färben Wolle egal in den in Kolonne IV angegebenen Nuancen.

| Beispiel | I | II | III | IV |
|---|---|---|---|---|
| 66 | 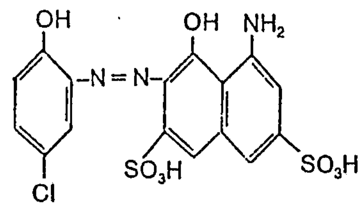 | 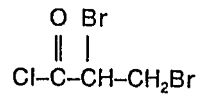 | Acetylaceton | marine-blau |
| 67 | dito | dito | Benzoylaceton | marine-blau |
| 68 | dito | dito | 2-Hydroxybenzophenon | marine-blau |
| 69 | dito | dito | Acetessigsäureäthylester | blaugrau |
| 70 | 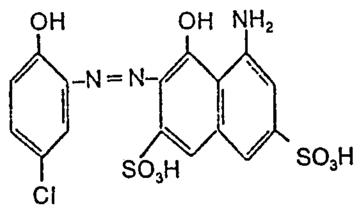 | 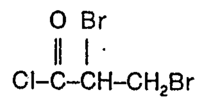 | 1-Phenyl-3-methyl-4-benzoylpyrazol-5-on | blaugrau |
| 71 | dito | 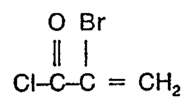 | Acetylaceton | grau |
| 72 | dito | 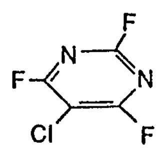 | Acetylaceton | grau |
| 73 | 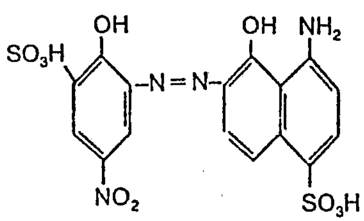 | 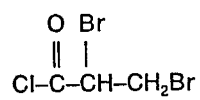 | 2-Hydroxybenzophenon | marine-blau |
| 74 | dito | dito | Acetessigsäureäthylester | grau |

| Beispiel | I | II | III | IV |
|---|---|---|---|---|
| 75 | 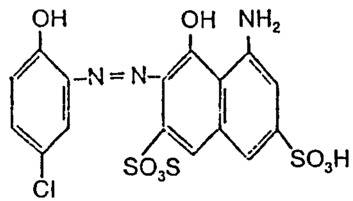 | 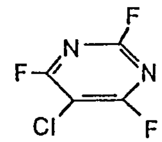 | 2-Hydroxyacetophenon | grünschwarz |
| 76 | 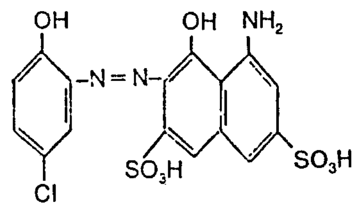 | 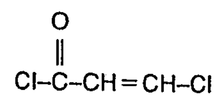 | Acetylaceton | blau |
| 77 | 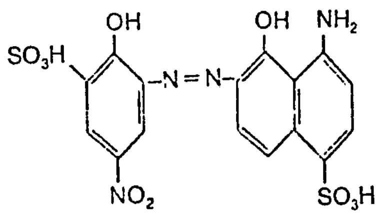 | 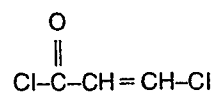 | Acetylaceton | grünblau |
| 78 | 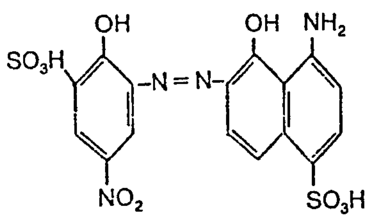 | 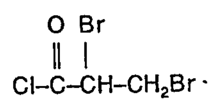 | Benzoylaceton | blau |
| 79 | 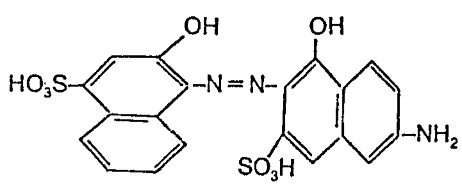 | 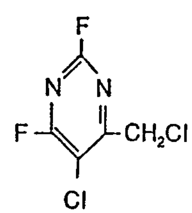 | Acetylaceton | blau |

| Beispiel | I | II | III | IV |
|---|---|---|---|---|
| 80 | dito | 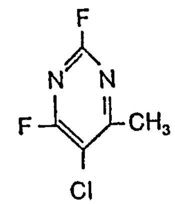 | Acetylaceton | blau |
| 81 | dito | 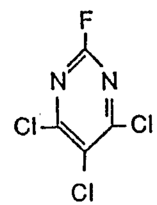 | Acetylaceton | blau |
| 82 | 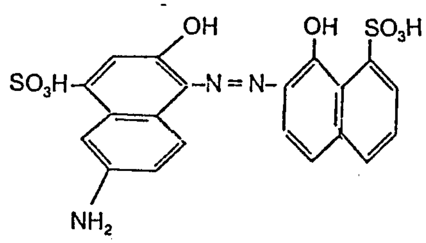 | $ClCOCBr = CH_2$ | Acetylaceton | grau |
| 83 | 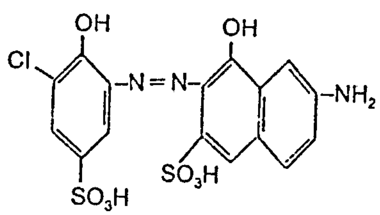 | $ClCOCHBrCH_2Br$ | Acetylaceton | violett |

| Beispiel | I | II | III | IV |
|---|---|---|---|---|
| 84 | 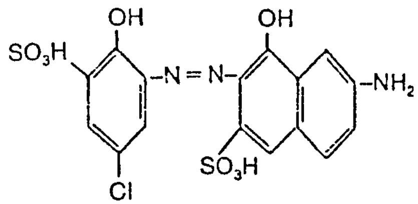 | $ClCOCHBrCH_2Br$ | Acetylaceton | graublau |
| 85 | 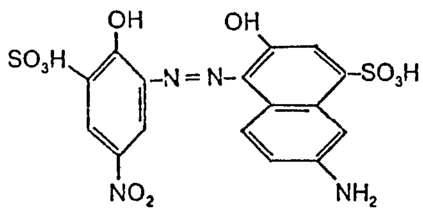 | $ClCOCHBrCH_2Br$ | Acetylaceton | grau |
| 86 | 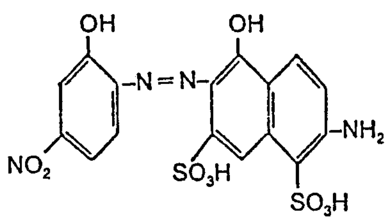 | $ClCOCHBrCH_2Br$ | Acetylaceton | blau |
| 87 | 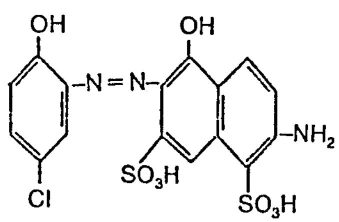 | $ClCOCHBrCH_2Br$ | Acetylaceton | blauviolett |

| Beispiel | I | II | III | IV |
|---|---|---|---|---|
| 88 | 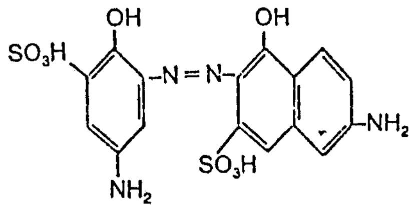 | $ClCOCHBrCH_2Br$ | Acetylaceton | grau |
| 89 | 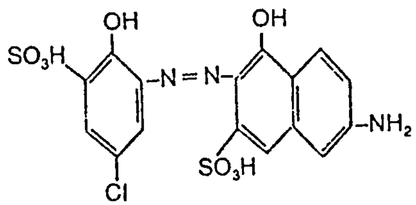 | $ClCOCHBrCH_2Br$ | Acetylaceton | violett |
| 90 | 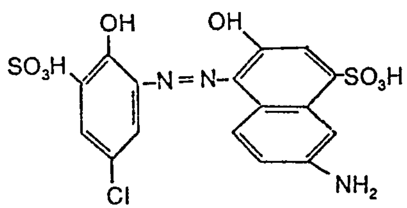 | $ClCOCHBrCH_2Br$ | Acetylaceton | marine-blau |
| 91 | 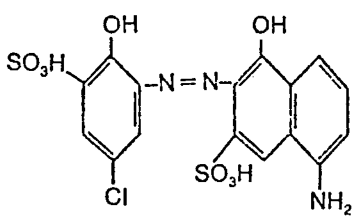 | $ClCOCHBrCH_2Br$ | Acetylaceton | violett |

| Beispiel | I | II | III | IV |
|---|---|---|---|---|
| 92 | 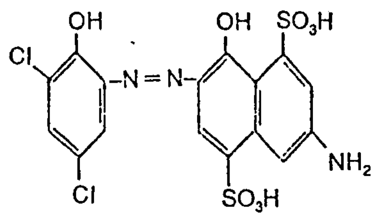 | $ClCOCHBrCh_2Br$ | Acetylaceton | rotstichig grau |
| 93 | 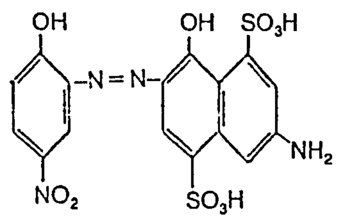 | $ClCOCHBrCH_2Br$ | Acetylaceton | violett |
| 94 | 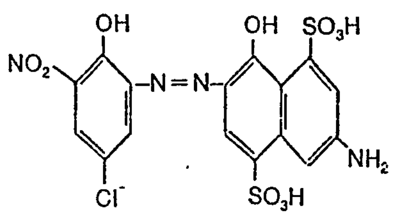 | $ClCOCHBrCH_2Br$ | Acetylaceton | grau |
| 95 | 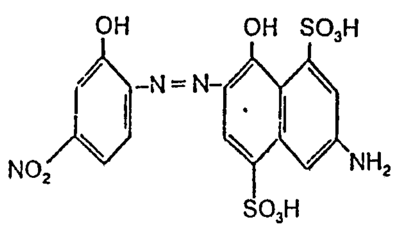 | $ClCOCHBrCH_2Br$ | Acetylaceton | grünstichig grau |

Beispiel 96

41,9 Teile des Monoazofarbstoffs aus diazotierter 1-Hydroxy-2-amino-4-nitrobenzol-6-sulfonsäure und 1-Phenyl-3-methyl-5-pyrazolon werden in Form des 1 Atom Chrom pro Molekül Azoverbindung enthaltenden 1:1-Chromkomplexes unter Rühren in 600 Teilen Wasser von 60–70 °C angeschlämmt und durch Zugabe von 5n-Natriumhydroxydlösung bis zum pH-Wert 9,0–9,5 in Lösung gebracht. Unter Einhalten der Temperatur von 60–70 °C wird anschließend in 1 Stunde die Lösung von 36,0 Teilen kristallisiertem Natriumsulfid ($Na_2S \times 9H_2O$) in 100 Teilen Wasser zugetropft. Die unter Farbumschlag von Gelborange nach Orangerot verlaufende Reduktion der Nitrogruppe ist nach 2 bis 3 Stunden Rühren bei gleicher Temperatur beendet. Der erhaltene aminogruppenhaltige 1:1-Chromkomplex wird durch Neutralisieren der Reaktionslösung und Zugabe von Natriumchlorid abgeschieden, durch Filtration isoliert und mit verdünnter Natriumchloridlösung gewaschen.

Der erhaltene Filterkuchen wird in 600 Teilen Wasser von 60–65 °C angeschlämmt und durch Zugabe von 2n-Natriumhydroxydlösung bei pH 8,5–9,0 gelöst. Nach Zugabe von 10,0 Teilen Acetylaceton wird das Reaktionsgemisch unter Einhalten eines pH-Bereichs von 8,0–9,0 so lange bei 60–70 °C gerührt, bis die Umsetzung des 1:1-Chromkomplexes mit dem Liganden beendet ist. Die erhaltene orangerote Reaktionslösung wird anschließend auf 10–15 °C gekühlt und innerhalb 1 Stunde mit der Lösung von 30 Teilen 1:2-Dibrompropionylchlorid in 30 Teilen Aceton versetzt, wobei zugleich durch Zutropfen von 2n-Natriumhydroxydlösung ein pH-Bereich von 6,0–6,5 eingehalten wird. Nach weiteren 2 Stunden Rühren bei Raumtemperatur wird der Metallkomplex von folgender Konstitution

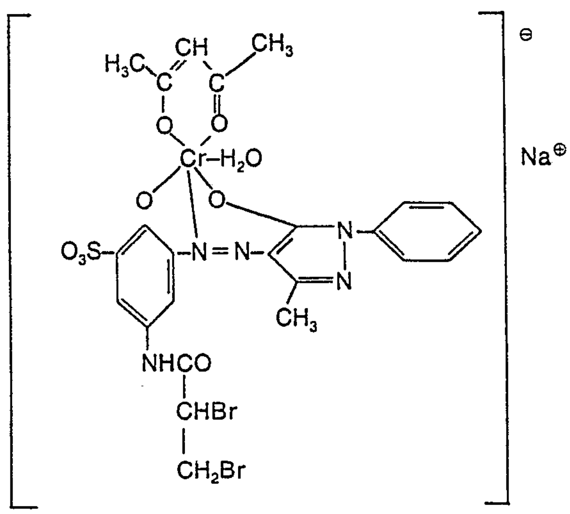

durch Zugabe von Natriumchlorid aus der Reaktionslösung abgeschieden, durch Filtration isoliert und im Vakuum bei 70 °C getrocknet.

Der neue, wasserlösliche Farbstoff ergibt auf Wollmaterial nach dem angegebenen Färbeverfahren volle, naß- und lichtechte Orangetöne.

Werden zur Umsetzung mit dem aminogruppenhaltigen 1:1-Chromkomplex anstelle von Acetylaceton 16,2 Teile Benzoylaceton verwendet, so wird ein etwas rotstichigerer Orangefarbstoff mit den gleichen koloristischen Eigenschaften erhalten.

Weitere Farbstoffe mit ähnlichen Eigenschaften sind in analoger Weise zugänglich durch Umsetzen der in der folgenden Tabelle III in Kolonne I angegebenen, als 1:1-Chromkomplexe vorliegenden aminogruppenhaltigen Monoazoverbindungen mit den in Kolonne II aufgeführten, farblosen Verbindungen und anschließende Acylierung des erhaltenen Chromkomplexes mit 1,2-Dibrompropionylchlorid. In Kolonne III sind die mit den neuen Farbstoffen auf Wolle erzielbaren Nuancen angegeben.

| Beispiel | I | II | III |
|---|---|---|---|
| 97 | 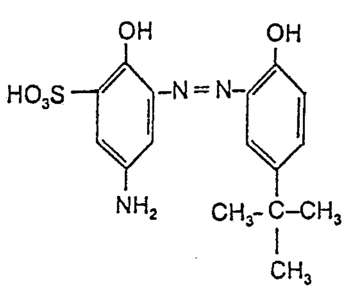 | $CH_3C(=O)CH_2C(=O)CH_3$ | rotstichig braun |

| Beispiel | I | II | III |
|---|---|---|---|
| 98 | dito | 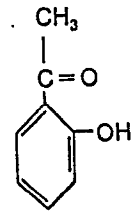 | braun |
| 99 | 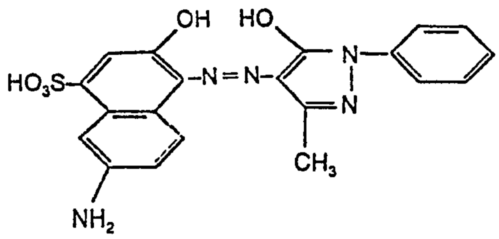 | 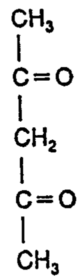 | rot |
| 100 | dito | 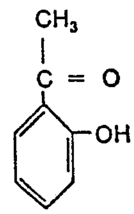 | blaustichig rot |
| 101 | 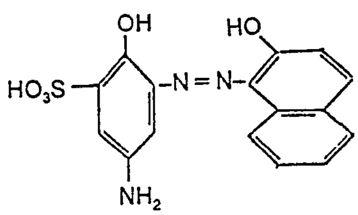 | 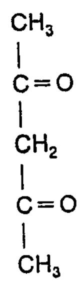 | violettgrau |
| 102 | 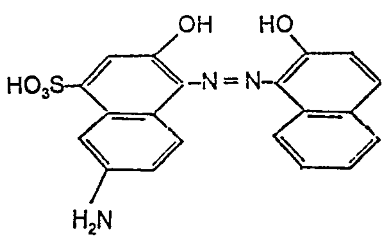 | 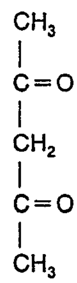 | blau |
| 103 | dito | 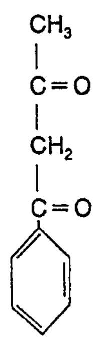 | graublau |

| Beispiel | I | II | III |
|---|---|---|---|
| 104 | dito | 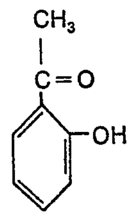 | graublau |
| 105 | 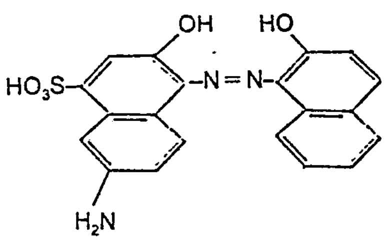 | 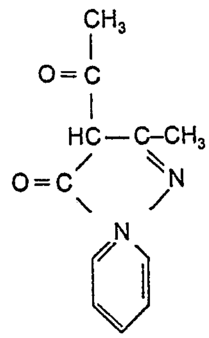 | grüngrau |
| 106 | 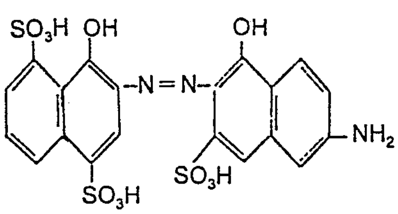 | 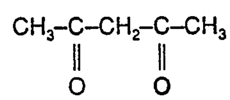 | graust.-blau |
| 107 | 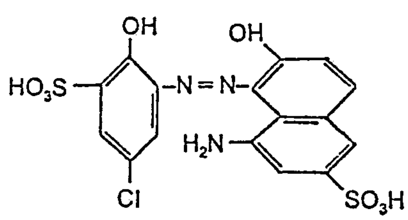 | dito | blau |
| 108 | 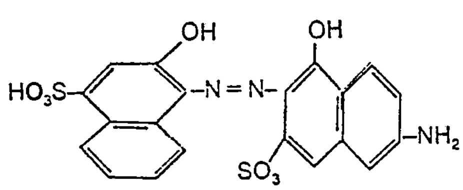 | 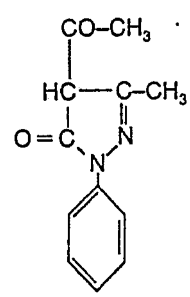 | blau |

Färbebeispiel 1

Darstellung des Chromkomplexes der Formel

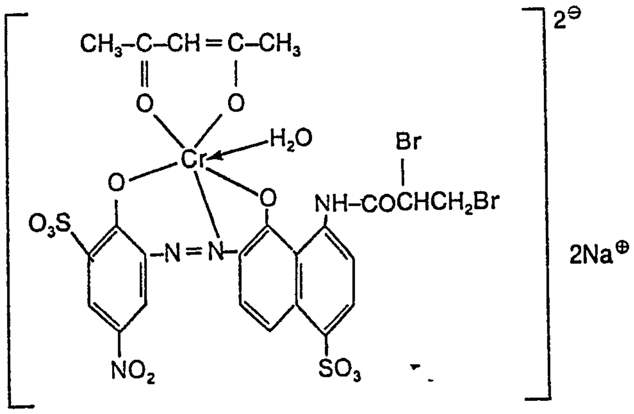

im Färbebad und gleichzeitiges Färben.

10 Teile Wollgewebe werden bei 40° in ein Färbebad eingeführt, das auf 340 Teile Wasser 0,66 Teile des 1:1-Chromkomplexes der Formel

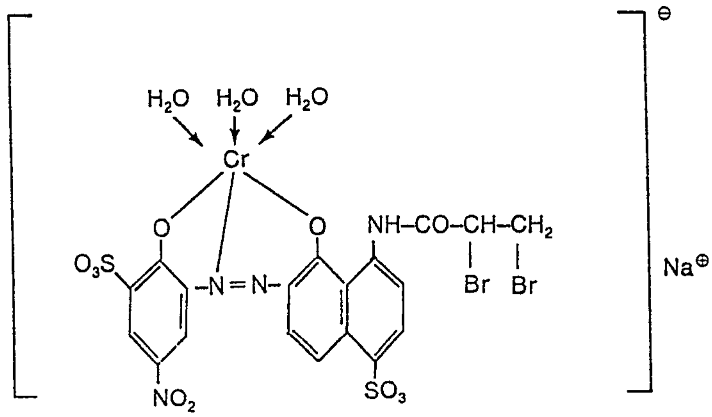

0,66 Teile Acetylaceton, 0,4 Teile Ammonsulfat, 0,4 Teile Essigsäure (80%-ig) und 0,2 Teile eines Egalisierhilfsmittels enthält.

In 20 Minuten wird auf 70–75° aufgeheizt, dann wird diese Temperatur 30 Minuten lang beibehalten. In 15 Minuten wird auf 100 °C aufgeheizt, diese Temperatur wird 90 Minuten beibehalten. In 5 Minuten wird die Temperatur auf 85° absinken gelassen; der pH wird mit 0,4 Teilen einer 25%igen Ammoniaklösung auf ca. 8,5 gestellt. Nach 15 Minuten bei 85° wird das Wollgewebe aus der Flotte entfernt und gespült. Es liegt eine egale Marineblau-Färbung vor.

Färbebeispiel 2

In 4000 Teilen Wasser von 50° werden nacheinander 4 Teile 80%ige Essigsäure, 2 Teile des Ammoniumsalzes des sauren Schwefelsäureesters des Adduktes aus einem Fettamin (bestehend aus 30% Hexadecylamin, 25% Octadecylamin und 45% Octadecenylamin und 7 Mol Äthylenoxid) sowie 4 Teile Ammoniumsulfat gelöst.

4 Teile des gemäß Beispiel 2 erhaltenen Farbstoffes werden in 100 Teilen Wasser heiß gelöst und dem obigen Färbebad zugegeben. Dann wird mit 100 Teilen vorgenetzten Wollstrickgarns eingegangen und im Verlaufe von 30 Minuten die Temperatur des Bades von 50 auf 80° erhöht. Nach 20 Minuten Färben bei 80° wird zum Sieden erhitzt und anschließend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heißem und kaltem Wasser, Ansäuern mit 1 Teil 80%iger Ameisensäure, Zentrifugieren und Trocknen erhält man ein dunkelblau gefärbtes Wollgarn von sehr guter Naß- und Reibechtheit sowie ausgezeichneter Lichtechtheit.

Färbebeispiel 3

Ein filzfest ausgerüstetes Wollgewebe wird mit der nachfolgend beschriebenen Zubereitung getränkt und auf dem Foulard auf eine Feuchtigkeitsaufnahme von 250% abgequetscht:

4 Teile Diaprint REG (säurebeständiges Verdickungsmittel),
1 Teil Sulfaminsäure
0,2 Teile Thymol
0,2 Teile Emulgator
94,6 Teile Wasser
100 Teile

Das imprägnierte Material wird anschließend in einer heizbaren Presse während 3 Minuten bei 100 bis 105° unter einem Druck von etwa 0,5 $kg/cm^2$ mit einem Transferpapier zusammengepresst, welches ein in üblicher Weise mit dem Farbstoff gemäß Beispiel 3 aufgebrachtes Druckmuster trägt. Nach Spülen und Trocknen des Wollgewebes weist dieses ein entsprechendes, schwarzes Druckmuster von sehr guten Echtheitseigenschaften auf.

Färbebeispiel 4

Ein Flanellgewebe aus chlorierter Wolle wird auf einem Foulard mit nachfolgend beschriebener Farbstoffzubereitung getränkt und auf eine Flüssigkeitsaufnahme von 100% abgequetscht.

50 Teile des Farbstoffes gemäß Beispiel 13
300 Teile Harnstoff
320 Teile Solvitose OFA à 4% (Verdickungsmittel)
10 Teile einer Mischung von anionaktivem Fettalkoholäthersulfat mit nichtionogenen Netzmitteln
10 Teile des in Färbebeispiel 2 verwendeten Egalisiermittels
10 Teile Natrium-metabisulfat
10 Teile Essigsäure 80%ig
290 Teile Wasser
1000 Teile Foulardierflotte.

Das imprägnierte Gewebe wird anschließend in aufgerolltem und luftdicht verpacktem Zustand während 48 Stunden bei Raumtemperatur gelagert. Nach Spülen mit kaltem Wasser wird das Material auf frischem Bad mit soviel Ammoniak zu 24% behandelt, daß ein pH-Wert von 8,5 erreicht wird und während 15 Minuten bei 80° gehalten. Nach Spülen in warmem Wasser wird zum Schluß mit Essigsäure 80%ig abgesäuert und getrocknet. Das Wollgewebe ist in einem vollen Schwarz von ausgezeichneten Echtheitseigenschaften gefärbt.

Färbebeispiel 5

Ein Flanellgewebe aus chlorierter Wolle wird auf einem Foulard mit nachfolgend beschriebener Farbstoffzubereitung getränkt und auf eine Flüssigkeitsaufnahme von 100% abgequetscht:

50 Teile des Farbstoffes gemäß Beispiel 56
300 Teile Solvitose OFA à 40% (Verdickungsmittel)
20 Teile einer Mischung von anionaktivem Fettalkoholäthersulfat mit nichtionogenen Netzmitteln
10 Teile des in Färbebeispiel 2 verwendeten Egalisiermittels
20 Teile Essigsäure 80%ig
600 Teile Wasser
1000 Teile Foulardierflotte.

Das imprägnierte Gewebe wird anschließend in einen Dämpfer gebracht und während 20 bis 40 Minuten mit gesättigtem Dampf behandelt. Nach Spülen mit kaltem Wasser wird das Material auf frischem Bad mit soviel 24%iger Ammoniaklösung behandelt, daß ein pH-Wert von 8,5 erreicht wird und während 15 Minuten bei 80° gehalten. Nach Spülen in warmem Wasser wird zum Schluß mit Essigsäure 80%ig abgesäuert und getrocknet. Das Wollgewebe ist in einem vollen Schwarzton von ausgezeichneten Echtheitseigenschaften gefärbt.

Färbebeispiel 6

In 1000 Teilen Wasser von 50° werden nacheinander 4 Teile 80%ige Essigsäure, 2 Teile des Ammoniumsalzes des sauren Schwefelsäureesters des Adduktes aus einem Fettamin (bestehend aus 30% Hexadecylamin, 25% Octadecylamin und 45% Octadecenylamin und 7 Mol Äthylenoxid) sowie 4 Teile Ammoniumsulfat gelöst.

3 Teile des gemäß Beispiel 17 erhaltenen Farbstoffes werden in 100 Teilen Wasser heiß gelöst und dem obigen Färbebad zugegeben. Ein Zirkulationsfärbeapparat wird mit 100 Teilen vorgenetztem Kammzug in Wickelform beschickt und im Verlaufe von 30 Minuten die Temperatur des Bades von 50 auf 97–99° erhöht, und anschließend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut bei dieser Temperatur nachbehandelt. Nach gründlichem Spülen mit heißem und kaltem Wasser, Absäuern mit 1 Teil 80%iger Ameisensäure, Zentrifugieren und Trocknen erhält man ein dunkelviolett gefärbtes Färbegut von sehr guter Naßechtheit sowie ausgezeichneter Lichtechtheit.

Färbebeispiel 7

In 1000 Teilen Wasser von 50° werden nacheinander 6 Teile 80%ige Essigsäure, 3 Teile des Ammoniumsalzes des sauren Schwefelsäureesters des Adduktes aus einem Fettamin (bestehend aus 30% Hexadecylamin, 25% Octadecylamin und 45% Octadecenylamin und 7 Mol Äthylenoxid) sowie 6 Teile Ammoniumsulfat gelöst.

3 Teile des gemäß Beispiel 2 erhaltenen Farbstoffes werden in 100 Teilen Wasser heiß gelöst und dem obigen Färbebad zugegeben. Ein Zirkulationsfärbeapparat wird mit 150 Teilen vorgenetzter loser Wolle beschickt und im Verlaufe von 30 Minuten die Temperatur der Flotte von 50° auf 97–99° erhöht, und anschließend 90 Minuten kochend gefärbt. Der Farbstoff zieht fast vollkommen auf das Substrat auf. Nach Abkühlen der Flotte auf 80° wird der pH-Wert von etwa 4,5 auf Zugabe von Ammoniaklösung auf bleibend 8,5 erhöht und das Färbegut 20 Minuten bei dieser Temperatur nachbehandelt. Nach gründlichem Spülen mit heißem und kaltem Wasser, Absäuern mit 1 Teil 80%iger Ameisensäure, Zentrifugieren und Trocknen erhält man faseregal dunkelblau gefärbtes Substrat

mit guter Naß- und Reibechtheit sowie ausgezeichneter Lichtechtheit.

Färbebeispiel 8

In 4000 Teilen Wasser von 50° werden nacheinander 4 Teile 80%ige Essigsäure, 2 Teile des Ammoniumsalzes des sauren Schwefelsäureesters des Adduktes aus einem Fettamin (bestehend aus 30% Hexadecylamin, 25% Octadecylamin und 45% Octadecenylamin und 7 Mol Äthylenoxid) sowie 4 Teile Ammoniumsulfat gelöst.

0,45 Teile des gemäß Beispiel 2 erhaltenen Farbstoffes und 0,30 Teile des gelben Farbstoffes der Formel

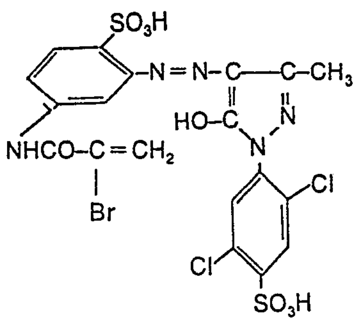

und 0,40 Teile des roten Farbstoffes der Formel

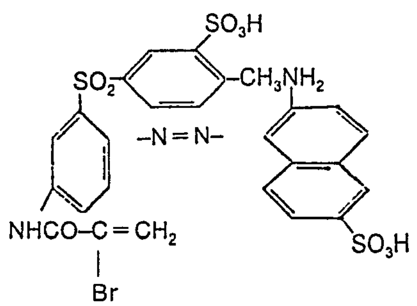

werden in 100 Teilen Wasser heiß gelöst und dem obigen Färbebad zugegeben. Dann wird mit 100 Teilen vorgenetztem Wollgewebe eingegangen und im Verlaufe von 30 Minuten die Temperatur des Bades von 50 auf 80° erhöht. Nach 20 Minuten Färben bei 80° wird zum Sieden erhitzt und anschließend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heißem und kaltem Wasser, Absäuern mit 1 Teil 80%iger Ameisensäure, Zentrifugieren und Trocknen erhält man ein faseregales dunkelbraun gefärbtes Wollgewebe von sehr guter Naß- und Reibechtheit sowie ausgezeichneter Lichtechtheit.

Färbebeispiel 9

In 1000 Teilen Wasser von 50° werden nacheinander 4 Teile 80%ige Essigsäure, 2 Teile des Ammoniumsalzes des sauren Schwefelsäureesters des Adduktes aus einem Fettamin (bestehend aus 30% Hexadecylamin, 25% Octadecylamin und 45% Octadecenylamin und 7 Mol Äthylenoxid) sowie 4 Teile Ammoniumsulfat gelöst.

0,6 Teile des gemäß Beispiel 13 erhaltenen Farbstoffes und 0,09 Teile des gelben Farbstoffes der Formel

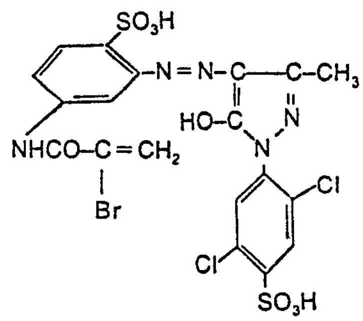

und 0,2 Teile des roten Farbstoffes der Formel

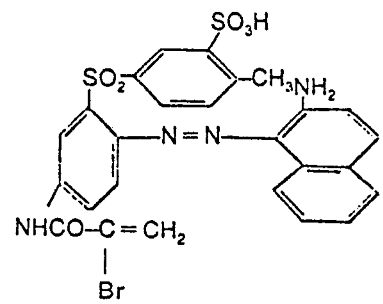

werden in 100 Teilen Wasser heiß gelöst und dem obigen Färbebad zugegeben. Ein Zirkulationsfärbeapparat wird mit 100 Teilen vorgenetztem Kammzug in Wickelform beschickt und im Verlaufe von 30 Minuten die Temperatur des Bades von 50 auf 97–99° erhöht und anschließend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heißem und kaltem Wasser, Absäuern mit 1 Teil 80%iger Ameisensäure, Zentrifugieren und Trocknen erhält man ein grau gefärbtes Färbegut von sehr guter Naßechtheit sowie ausgezeichneter Lichtechtheit.

**Patentansprüche**

1. Chromkomplexe der Formel

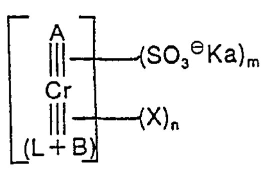

(1),

worin A der Rest eines dicyclisch metallisierbaren Azo- oder Azomethinfarbstoffes, B der Rest einer monoanionischen, zweizähnigen, komplexbildenden, organischen Verbindung, der über Sauerstoffatome mit dem Chromatom verbunden ist, L ein farbloser, monofunktioneller Ligand, X ein mit Halogen substituierter $C_{2-4}$-Alkanoyl-Reaktivrest, ein gegebenenfalls mit Halogen substituierter $C_{3-4}$-Alkenoyl-Reaktivrest oder ein Reaktivrest der Pyrimidinreihe, wobei der Reaktivrest X über ein Brückenglied an den Rest A und/oder B gebunden ist, Ka ein Kation, m = 1, 2 oder 3 und n = 1 oder 2 ist, und wobei die Gruppe $SO_3^{\ominus}Ka$ an den Rest A und/oder B gebunden ist.

2. Chromkomplexe gemäß Anspruch 1, worin der Rest A der Formel

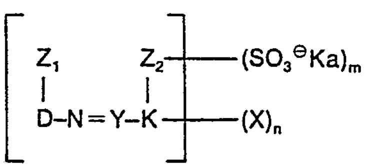 (2)

entspricht, worin D der Rest einer Diazokomponente der Benzol- oder Naphthalinreihe, Y ein Stickstoffatom oder die CH-Gruppe, K für den Fall, daß Y ein Stickstoffatom ist, der Rest einer Kupplungskomponente oder, für den Fall, daß Y die CH-Gruppe ist, der Rest eines o-Hydroxybenzaldehyds oder eines o-Hydroxynaphthaldehyds, $Z_1$ in o-Stellung zu dem Rest –N=Y die –O– oder –COO-Gruppe und $Z_2$ die –O– oder –N(R)-Gruppe ist, wobei R Wasserstoff, gegebenenfalls substituiertes $C_{1-4}$-Alkyl oder gegebenenfalls substituiertes Phenyl bedeutet, und $Z_2$ in Nachbarstellung zu dem Rest –N=Y an K gebunden ist, Ka, X, m und n die in Anspruch 1 angegebenen Bedeutungen haben.

3. Chromkomplexe gemäß Anspruch 1, worin B der Rest eines β-Diketons, o-Hydroxyaldehyds, o-Nitrosophenols oder o-Nitrosonaphthols oder der Rest der Formeln

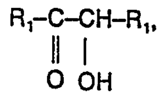, 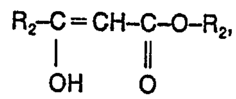, 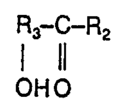

ist, worin $R_1$ Aryl, insbesondere Phenyl, $R_2$ $C_{1-4}$-Alkyl oder Aryl, insbesondere Phenyl, $R_3$ Aryl, insbesondere Phenyl ist, wobei die HO-Gruppe in o-Stellung zum Carbonylrest an $R_3$ gebunden ist, und die Reste $R_1$, $R_2$ und $R_3$ gegebenenfalls substituiert sind.

4. Chromkomplexe gemäß Anspruch 1, worin X ein Mono-, Di- oder Trihalogenpyrimidinyl-, Acryloyl-, Mono-, Di- oder Trichloracryloyl-, Mono- oder Dibromacryloyl-, α,β-Dichlor- oder α,β-Dibrompropionyl- oder Chloracetylrest ist, der über ein Brückenglied an den Rest A gebunden ist.

5. Chromkomplexe gemäß Anspruch 4, worin X über ein Brückenglied der Formel

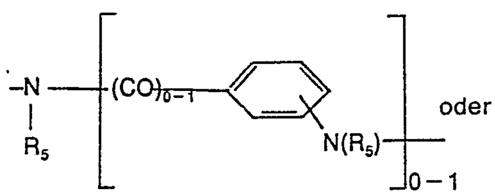 oder 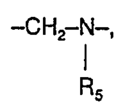

an den Rest A gebunden ist und $R_5$ Wasserstoff oder $C_{1-4}$-Alkyl ist.

6. Chromkomplexe gemäß einem der Ansprüche 1 bis 5 der Formel

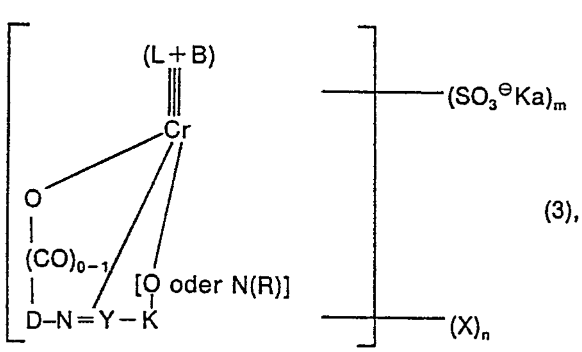 (3),

worin B den Rest von Acetylaceton, Benzoylaceton, Acetessigsäure-methylester oder -äthylester, Benzoylessigsäureäthylester, 2-Hydroxyacetophenon, 2-Hydroxybenzophenon, Dibenzoylmethan, Tropolon, Salicylaldehyd, Malonsäuredialdehyd, 2-Buten-3-hydroxycarbonsäureäthylester, 1-Phenyl-3-methyl-4-acetyl- oder -4-benzoylpyrazol-5-on, L einen farblosen monofunktionellen Liganden, D den Rest einer Diazokomponente der Benzol- oder Naphthalinreihe, der die $-(CO)_{0-1}-O-$Gruppe in o-Stellung zur –N=Y-Gruppe enthält, Y ein Stickstoffatom oder die –CH-Gruppe, K für den Fall, daß Y ein Stickstoffatom ist, den Rest einer Kupplungskomponente der Benzol- oder Naphthalinreihe oder der 5-Pyrazolon-, 5-Aminopyrazol-, Acetoacetarylid- oder Benzoylessigsäurearylidreihe bedeutet, der den Rest –[O oder N(R)]- in Nachbarstellung zu dem Rest –N=Y– enthält, und wobei R Wasserstoff, gegebenenfalls substituiertes $C_1$–$C_4$-Alkyl oder gegebenenfalls substituiertes Phenyl ist, oder für den Fall, daß Y die CH-Gruppe ist, K den Rest eines o-Hydroxy-benzaldehyds oder o-Hydroxynaphthaldehyds bedeutet, X α,β-Dibrompropionyl, α-Bromacryloyl, β-Chloracryloyl, 2,6-Difluor-5-chlorpyrimidinyl, 2-Fluor-5-chlor-6-chlormethylpyrimidinyl, 2-Fluor-5,6-dichlorpyrimidinyl oder 2-Fluor-5-chlor-6-methylpyrimidinyl, wobei der Rest X über ein aminogruppenhaltiges Brückenglied an D und/oder K gebunden ist, Ka ein Kation, m = 1, 2 oder 3 und n = 1 oder 2 bedeutet, wobei die Gruppe $SO_3^{\ominus}Ka$ an den Rest D und/oder K gebunden ist.

7. Chromkomplexe gemäß Anspruch 6, worin Y ein Stickstoffatom ist.

8. Chromkomplexe gemäß einem der Ansprüche 6 und 7 der Formel

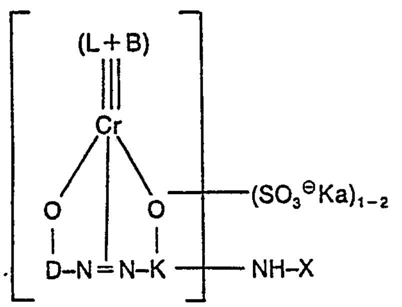

(4),

worin B den Rest von Acetylaceton, Benzoylaceton, Acetessigsäureäthylester, 2-Hydroxyacetophenon, 2-Hydroxybenzophenon, 1-Phenyl-3-methyl-4-acetylpyrazol-5-on, 1-Phenyl-3-methyl-4-benzoylpyrazol-5-on oder Salicylaldehyd, L als farbloser monofunktioneller Ligand Wasser, D ein Benzolrest, der das Sauerstoffatom in o-Stellung zur Azobrücke enthält und durch Sulfo, Nitro, Chlor und den Rest –NH–X substituiert sein kann oder ein Naphthalinrest, der das Sauerstoffatom in o-Stellung zu der Azobrücke enthält und der substituiert sein kann durch Sulfo, Nitro und den Rest –NH–X, K ein Naphthalinrest, der außer durch den Rest –NH–X durch 1 oder 2 Sulfonsäuregruppen substituiert ist, wobei der Rest –NH–X direkt oder über den Phenylaminorest an den Naphthalinkern gebunden ist, ein 1-Phenyl-3-methylpyrazolon-(5)-rest, wobei die Gruppe –NH–X an den Phenylring gebunden ist, oder ein 1-(2′,2″-Disulfostilben)-3-methylpyrazolon-(5)-rest, wobei die Gruppe –NH–X in 4″-Stellung gebunden ist, und X α,β-Dibrompropionyl, α-Bromacryloyl, β-Chloracryloyl, 2,6-Difluor-5-chlorpyrimidinyl, 2-Fluor-5,6-dichlorpyrimidinyl, 2-Fluor-5-chlor-6-chlormethylpyrimidinyl oder 2-Fluor-5-chlor-6-methylpyrimidinyl ist und Ka ein Alkalikation bedeutet.

9. Chromkomplexe gemäß Anspruch 8, worin B den komplex gebundenen Rest von Acetylaceton bedeutet.

10. Chromkomplexe gemäß Anspruch 8 der Formel

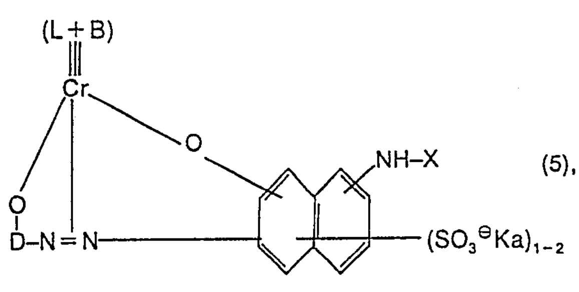

(5),

worin B, D, L und Ka die in Anspruch 8 angegebenen Bedeutungen haben, die Azogruppe an den Naphthalinkern in o-Stellung zu dem Rest –O– gebunden ist, X α,β-Dibrompropionyl oder α-Bromacryloyl bedeutet und der Chromkomplex nicht mehr als 1 oder 2 Sulfogruppen enthält.

11. Verfahren zur Herstellung der Chromkomplexe gemäß Anspruch 1, dadurch gekennzeichnet, daß man eine zweizähnige, komplexbildende, organische Verbindung, die den Rest B enthält, mit einem 1:1-Chromkomplex der Formel

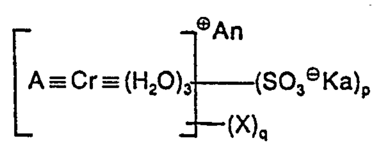

(6),

worin A und Ka die in Anspruch 1 angegebenen Bedeutungen haben, und p = 0, 1, 2 oder 3, q = 0, 1 oder 2 und An ein Anion ist, in wäßrigem Medium, gegebenenfalls in Gegenwart eines von Wasser verschiedenen, farblosen, monofunktionellen Liganden L, umsetzt und gegebenenfalls anschließend den erhaltenen Chromkomplex mit einer den/die faserreaktiven Rest(e) X einführenden Verbindung(en) umsetzt, wobei wenn p = 0 ist, der Rest B mindestens eine Sulfogruppe enthält.

12. Verfahren gemäß Anspruch 11, dadurch gekennzeichnet, daß man die zweizähnige, komplexbildende, organische Verbindung, die den Rest B enthält, mit dem 1:1-Chromkomplex der Formel (6) bei einer Temperatur von 60 bis 100 °C und einem pH von 5 bis 11 umsetzt.

13. Verfahren gemäß Anspruch 11, dadurch gekennzeichnet, daß man die Umsetzung mit einer die Reaktivgruppe(n) X einführenden Verbindung bei einer Temperatur von 15 bis 30 °C und einem pH von 5 bis 8 ausführt.

14. Verfahren zum Färben textiler Materialien mit Chromkomplexen gemäß den Ansprüchen 1 bis 10, dadurch gekennzeichnet, daß man eine wäßrige Flotte, welche eine den Rest B einführende Verbindung und den 1:1-Chromkomplex der Formel

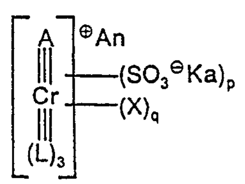

(11),

worin A, L, X und Ka die in Anspruch 1 angegebenen Bedeutungen haben, und p = 0 bis 3, q = 0 bis 2 und An ein Anion ist, das textile Material und gegebenenfalls weitere Zusätze enthält, verwendet, die Flotte gegebenenfalls stufenweise auf 100 °C erhitzt, anschließend alkalisch stellt und die Färbung fertigstellt, und wobei, falls p = 0 ist, der Rest B mindestens eine Sulfogruppe, und, falls q = 0 ist, mindestens einen faserreaktiven Rest X enthält.

15. Verfahren gemäß Anspruch 14, dadurch gekennzeichnet, daß man die den Rest B einführende Verbindungen und den 1:1-Chromkomplex der Formel (11) im molaren Verhältnis 2:1 bis 1:1 einsetzt.

16. Verfahren gemäß Anspruch 14, dadurch gekennzeichnet, daß man die Färbeflotte, welche die in Anspruch 13 angegebenen Komponenten enthält, innerhalb von 10 bis 45 Minuten auf 60 bis 80 °C erwärmt, diese Flottentemperatur für 10 bis 45 Minuten beibehält und anschließend innerhalb von 10 bis 30 Minuten auf 100 °C aufheizt, diese Temperatur für 30 bis 90 Minuten beibehält, auf 85 °C abkühlt, den pH der Flotte auf 8 bis 9 einstellt und während weiterer 10 bis 30 Minuten bei 85 °C nachbehandelt.

17. Verfahren gemäß Anspruch 14, dadurch gekennzeichnet, daß die Flotte als weitere Zusätze eine anorganische oder organische Säure, insbesondere Essigsäure, ein Alkali- oder Ammoniumsalz, insbesondere Ammoniumsulfat, und gegebenenfalls ein Egalisiermittel enthält.

18. Verfahren gemäß Anspruch 14, dadurch gekennzeichnet, daß man als textile Materialien synthetisches oder natürliches Polyamid verwendet.

19. Verwendung der Chromkomplexe gemäß Anspruch 1 zum Färben textiler Materialien.

20. Das gemäß einem der Ansprüche 13 oder 19 gefärbte Textilmaterial.

**Claims**

1. A chromium complex of the formula

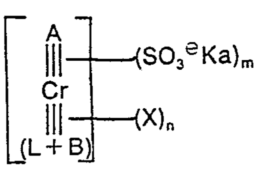

(1),

in which A is the radical of a dicyclically metallisable azo or azomethine dye, B is the radical of a monoanionic bidentate complexing organic compound which is bonded to the chromium atom via oxygen atoms, L is a colourless monofunctional ligand, X is a halogen-substituted $C_{2-4}$alkanoyl reactive radical, a $C_{3-4}$alkenoyl reactive radical which can be substituted by halogen, or a reactive radical of the pyrimidine series, the reactive radical X being bonded to the radical A and/or B via a bridge member, Ka is a cation, m is 1, 2, or 3, n is 1 or 2, and the $SO_3^{\ominus}Ka$ group is bonded to the radical A and/or B.

2. A chromium complex according to claim 1, in which the radical A has the formula

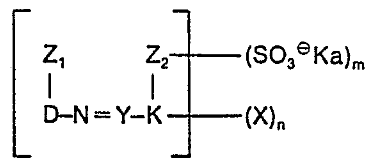

(2)

in which D is the radical of a diazo component of the benzene or naphthalene series, Y is a nitrogen atom or a CH group, K, in the event that Y is a nitrogen atom, is the radical of a coupling component, or in the event that Y is a CH group is the radical of an o-hydroxybenzaldehyde or o-hydroxynaphthaldehyde, $Z_1$, which is in the o-position to the –N=Y radical, is an –O– or –COO– group, and $Z_2$ is an –O– or –N(R)– group where R is hydrogen, substituted or unsubstituted $C_{1-4}$alkyl or substituted or unsubstituted phenyl, and $Z_2$ is bonded to K in the adjacent position to the –N=Y– radical, Ka, X, m and n being as defined in claim 1.

3. A chromium complex according to claim 1, in which B is the radical of a β-diketone, o-hydroxyaldehyde, o-nitrosophenol or o-nitrosonaphthol or the radical of the formulae

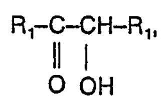, 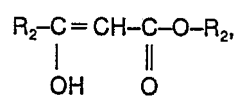, 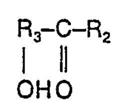

in which $R_1$ is aryl, in particular phenyl, $R_2$ is $C_{1-4}$alkyl or aryl, in particular phenyl, and $R_3$ is aryl, in particular phenyl, the OH group being bonded to $R_3$ in the o-position relative to the carbonyl radical, and the radicals $R_1$, $R_2$ and $R_3$ are unsubstituted or substituted.

4. A chromium complex according to claim 1, in which X is a monohalogenopyrimidinyl, dihalogenopyrimidinyl, trihalogenopyrimidinyl, acryloyl, monochloroacryloyl, dichloroacryloyl, trichloroacryloyl, monobromoacryloyl, dibromoacryloyl, α,β-dichloropropionyl, α,β-dibromopropionyl or chloroacetyl radical which is bonded to the radical A via a bridge member.

5. A chromium complex according to claim 4, in which X is bonded to the radical A via a bridge member of the formula

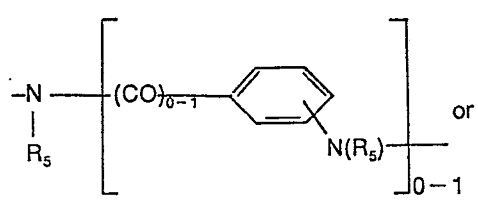

or

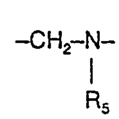

and $R_5$ is hydrogen or $C_{1-4}$alkyl.

6. A chromium complex according to any one of claims 1 to 5 of the formula

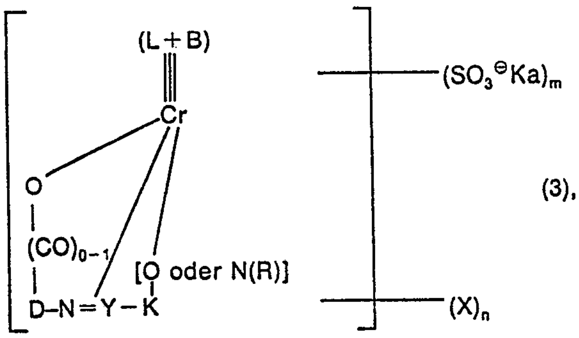

(3),

in which B is the radical of acetylacetone, benzoylacetone, methyl acetoacetate, ethyl acetoacetate, ethyl benzoylacetate, 2-hydroxyacetophenone, 2-hydroxybenzophenone, dibenzoylmethane, tropolone, salicylaldehyde, malonaldehyde, ethyl 2-butene-3-hydroxycarboxylate, 1-phenyl-3-methyl-4-acetylpyrazol- or -4-benzoylpyrazol-5-one, L is a colourless monofunctional ligand, D is the radical of a diazo component of the benzene or naphthalene series which contains the $-(CO)_{0-1}O$ group in the o-position relative to the $-N=Y-$ group, Y is a nitrogen atom or a $-CH$ group, K, in the event that Y is a nitrogen atom, is the radical of a coupling component of the benzene or naphthalene series or the 5-pyrazolone, 5-aminopyrazole, acetoacetarylide or benzoylacetarylide series which contains the $-[O$ or $N(R)]$ radical adjacent to the $-N=Y-$ radical and R is hydrogen, substituted or unsubstituted $C_1$–$C_4$alkyl or substituted or unsubstituted phenyl or in the event that Y is a CH group K is the radical of an o-hydroxybenzaldehyde or o-hydroxynaphthaldehyde, X is α,β-dibromopropionyl, α-bromoacryloyl, β-chloroacryloyl, 2,6-difluoro-5-chloropyrimidinyl, 2-fluoro-5-chloro-6-chloromethylpyrimidinyl, 2-fluoro-5,6-dichloropyrimidinyl or 2-fluoro-5-chloro-6-methylpyrimidinyl, the radical X being bonded to D and/or K via an amino-containing bridge member, Ka is a cation, m is 1, 2 or 3, n is 1 or 2, and the $SO_3^{\ominus}Ka$ group is bonded to the radical D and/or K.

7. A chromium complex according to claim 6, in which Y is a nitrogen atom.

8. A chromium complex according to either of claims 6 or 7 of the formula

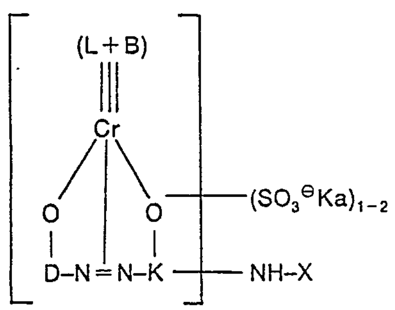

(4),

in which B is the radical of acetylacetone, benzoylacetone, ethyl acetoacetate, 2-hydroxyacetophenone, 2-hydroxybenzophenone, 1-phenyl-3-methyl-4-acetylpyrazol-5-one, 1-phenyl-3-methyl-4-benzoylpyrazol-5-one or salicylaldehyde, L, a colourless monofunctional ligand, is water, D is a benzene radical which contains the oxygen atom in the o-position relative to the azo bridge and can be substituted by sulfo, nitro, chlorine and the radical $-NH-X$ or is a naphthalene radical which contains the oxygen atom in the o-position relative to the azo bridge and can be substituted by sulfo, nitro, and the radical $-NH-X$, K is a naphthalene radical which, in addition to the radical $-NH-X$ is substituted by 1 or 2 sulfo groups, the radical $-NH-X$ being bonded to the naphthalene nucleus either directly or via the phenylamino radical, or is a 1-phenyl-3-methylpyrazol-5-one radical where the group $-NH-X$ is bonded to the phenyl ring or is a 1-(2′,2″-disulfostilbene)-3-methylpyrazol-5-one radical where the group $-NH-X$ is bonded in the 4″-position, X is α,β-dibromopropionyl, α-bromoacryloyl, β-chloroacryloyl, 2,6-difluoro-5-chloropyrimidinyl, 2-fluoro-5,6-dichloropyrimidinyl, 2-fluoro-5-chloro-6-chloromethylpyrimidinyl or 2-fluoro-5-chloro-6-methylpyrimidinyl, and Ka is an alkali metal cation.

9. A chromium complex according to claim 8, in which B is the complexed radical of acetylacetone.

10. A chromium complex according to claim 8 of the formula

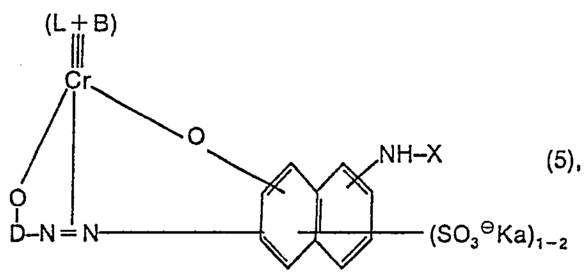

(5),

in which B, D, L and Ka are as defined in Claim 8, the azo group is bonded to the naphthalene nucleus in the o-position relative to the $-O-$ radical, X is α,β-dibromopropionyl or α-bromoacryloyl, and the chromium complex contains no more than 1 or 2 sulfo groups.

11. A process for preparing the chromium complex according to claim 1, which comprises reacting a bidentate complexing organic compound which contains the radical B with a 1:1 chromium complex of the formula

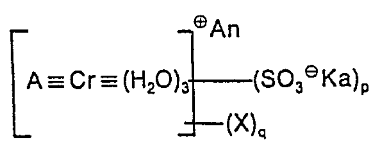

(6),

in which A and Ka are as defined in claim 1, p is 0, 1, 2 or 3, q is 0, 1 or 2 and An is an anion, in an aqueous medium in the absence or presence of a colourless monofunctional ligand L other than

water, and if desired subsequently reacting the resulting chromium complex with a compound, or compounds, which introduces the fibre-reactive radical(s) X, where, when p is 0, the radical B contains at least one sulfo group.

12. A process according to claim 11, wherein the bidentate complexing organic compound which contains the radical B is reacted with the 1:1 chromium complex of the formula (6) at a temperature of 60 to 100 °C and at pH 5–11.

13. A process according to claim 11, wherein the reaction with a compound which introduces the reactive group(s) X is carried out at a temperature of 15 to 30 °C and at pH 5–8.

14. A process for dyeing textile materials with a chromium complex according to claims 1 to 10, which comprises using an aqueous liquor which contains a compound introducing the radical B, the 1:1 chromium complex of the formula

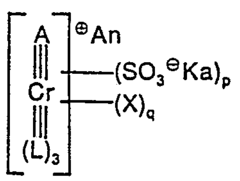

(11),

in which A, L, X and Ka are as defined in claim 1, p is 0 to 3, q is 0 to 2 and An is an anion, and the textile material and can, if desired, also contain further additives, heating the liquor to 100 °C in continuous or stepwise fashion and then bringing it to an alkaline pH, and completing the dyeing, and wherein if p is 0 the radical B contains at least one sulfo group and if q is 0 at least one fibre-reactive radical X.

15. A process according to claim 14, wherein the compounds introducing the radical B and the 1:1 chromium complex of the formula (11) are deployed in a molar ratio of 2:1 to 1:1.

16. A process according to claim 14, wherein the dyeing liquor which contains the components indicated in claim 13 is raised to 60 to 80 °C in the course of 10 to 45 minutes, is maintained at said temperature for 10 to 45 minutes, is then raised to 100 °C in the course of 10 to 30 minutes, is maintained at said temperature for 30 to 90 minutes, is cooled down to 85 °C, is brought to pH 8–9 and is used to after-treat the dyeing at 85 °C for a further 10 to 30 minutes.

17. A process according to claim 14, wherein the liquor contains as further additives an inorganic or organic acid, in particular acetic acid, and an alkali metal or ammonium salt, in particular ammonium sulfate and can, if desired, also contain a levelling agent.

18. A process according to claim 14, wherein the textile materials used are made of synthetic or natural polyamide.

19. Use of the chromium complex according to claim 1 for dyeing textile materials.

20 A textile material dyed according to either of claims 13 to 19.

**Revendications**

1. Complexes de chrome de formule

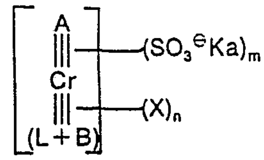

(1),

dans laquelle A est le reste d'un colorant azoïque ou azométhine bicyclique métallable; B est le reste d'un composé organique monoanionique bidenté, complexant, qui est lié à l'atome de chrome par des atomes d'oxygène; L est un ligand monofonctionnel incolore; X est un radical réactif alcanoyle en $C_{2-4}$ substitué par un halogène, un radical réactif alcénoyle en $C_{3-4}$ éventuellement substitué par un halogène, ou un radical réactif de la série de la pyrimidine, le radical réactif X étant lié au reste A et/ou au reste B par un chaînon pontant; Ka est un cation; m vaut 1, 2 ou 3; et n vaut 1 ou 2; et le groupe $SO_3^{\ominus}Ka$ étant lié au reste A et/ou au reste B.

2. Complexes de chrome selon la revendication 1, dans lesquels le reste A correspond à la formule

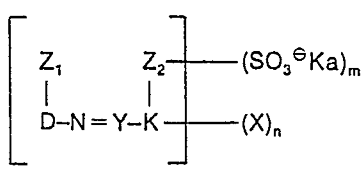

(2)

dans laquelle D est le reste d'un composant diazo de la série du benzène ou du naphtalène; Y est un atome d'azote ou le groupe CH; K, dans le cas où Y est un atome d'azote, est le reste d'un composant de copulation, ou, dans le cas où Y est le groupe CH, est le reste d'un o-hydroxybenzaldéhyde ou d'un o-hydroxynaphtaldéhyde; $Z_1$ est –O– ou le groupe –COO– en position ortho par rapport au radical –N=Y–; et $Z_2$ est –O– ou le groupe –N(R)–, R représentant un atome d'hydrogène ou un groupe alkyle en $C_{1-4}$ éventuellement substitué ou un groupe phényle éventuellement substitué; et $Z_2$ est lié à K en position voisine par rapport au radical –N=Y–; Ka, X, m et n ont les significations données dans la revendication 1.

3. Complexes de chrome selon la revendication 1, dans lesquels B est le reste d'une β-dicétone, d'un o-hydroxyaldéhyde, d'un o-nitrosophénol ou d'un o-nitrosonaphtol, ou le reste d'un composé de formules

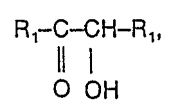 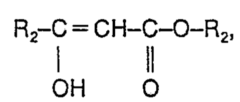 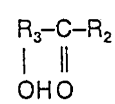

dans lesquelles $R_1$ est un groupe aryle, en particulier phényle; $R_2$ est un groupe alkyle en $C_{1-4}$ ou aryle, en particulier phényle; $R_3$ est un groupe aryle, en particulier phényle, le groupe OH étant lié à $R_3$ en position ortho par rapport au radical carbonyle, et les radicaux $R_1$, $R_2$ et $R_3$ étant éventuellement substitués.

4. Complexes de chrome selon la revendication 1, dans lesquels X est un reste mono-, di- ou trihalogénopyrimidinyle, acryloyle, mono-, di- ou trichloroacryloyle, mono- ou dibromoacryloyle, α,β-dichloro- ou α,β-dibromopropionyle ou chloracétyle, qui est lié au reste A par un chaînon pontant.

5. Complexes de chrome selon la revendication 4, dans lesquels X est lié au reste A par un chaînon portant de formule

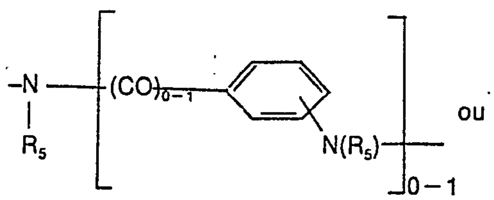

ou

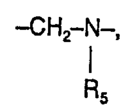

et $R_5$ est un atome d'hydrogène ou un radical alkyle en $C_{1-4}$.

6. Complexes de chrome selon l'une des revendications 1 à 5, de formule

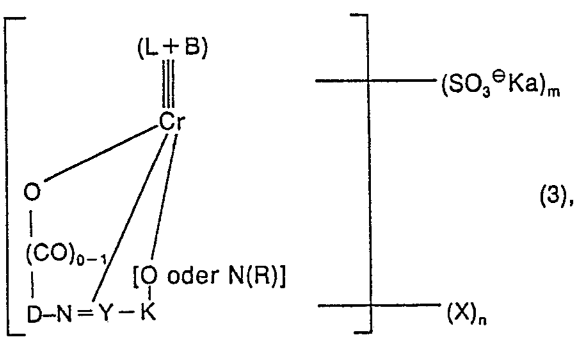

(3),

dans laquelle B est le reste de l'acétylacétone, de la benzoylacétone, de l'acétoacétate de méthyle ou d'éthyle, du benzoylacétate d'éthyle, de la 2-hydroxyacétophénone, de la 2-hydroxybenzophénone, du dibenzoylméthane, de la tropolone, de l'aldéhyde salicylique, du dialdéhyde malonique, du 2-butène-3-hydroxycarboxylate d'éthyle, de la 1-phényl-3-méthyl-4-acétyl- ou -4-benzoylpyrazole-5-one; L est un ligand monofunctionnel incolore; D est le reste d'un composant diazo de la série du benzène ou du naphtalène qui contient le groupe $-(CH)_{0-1}-O-$ en position ortho par rapport au groupe $-N=Y-$; Y est un atome d'azote ou le groupe $-CH-$; K, dans le cas où Y est un atome d'azote, est le reste d'un composant de copulation de la série du benzène ou du naphtalène, ou de la série de la 5-pyrazolone, du 5-aminopyrazole, des acétoacétarylides, des benzoylacétarylides, qui contient le radical $-[O$ ou $N(R)]-$ en position voisine par rapport au radical $-N=Y-$, et R étant un atome d'hydrogène ou un groupe alkyle en $C_1-C_4$ éventuellement substitué ou un groupe phényle éventuellement substitué, ou, dans le cas où Y est le groupe CH, K est le reste d'un o-hydroxybenzaldéhyde ou o-hydroxynaphtaldéhyde; X est le radical α,β-dibromopropionyle, α-bromoacryloyle, β-chloroacryloyle, 2,6-difluoro-5-chloropyrimidinyle, 2-fluoro-5-chloro-6-chlorométhyl-pyrimidinyle, 2-fluoro-5,6-dichloropyrimidinyle ou 2-fluoro-5-chloro-6-méthyl-pyrimidinyle, le radical X étant lié à D et/ou à K par un chaînon pontant aminé; Ka représente un cation; m vaut 1, 2 ou 3 et n vaut 1 ou 2, le groupe $SO_3^{\ominus}Ka$ étant lié au reste D et/ou au reste K.

7. Complexes de chrome selon la revendication 6, dans lesquels Y est un atome d'azote.

8. Complexes de chrome selon l'une des revendications 6 et 7, de formule

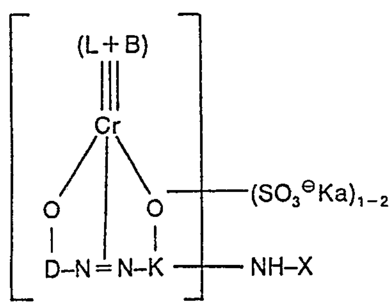

(4),

dans laquelle B est le reste de l'acétylacétone, de la benzoylacétone, de l'acétoacétate d'éthyle, de la 2-hydroxyacétophénone, de la 2-hydroxybenzophénone, de la 1-phényl-3-méthyl-4-acétylpyrazole-5-one, de la 1-phényl-3-méthyl-4-benzoylpyrazole-5-one ou de l'aldéhyde salicylique; L en tant que ligand monofonctionnel incolore est l'eau; D est un radical benzénique qui comporte l'atome d'oxygène en position ortho par rapport au pont azo et qui peut être substitué par un atome de chlore ou par un groupe sulfo, nitro et par le reste –NH–X, ou un radical naphtalène qui comporte l'atome d'oxygène en position ortho par rapport au pont azo et qui peut être substitué par un groupe sulfo ou nitro et par le radical –NH–X; K est un reste naphtalène qui est substitué, outre par le radical –NH–X, par 1 ou 2 groupes sulfo, le radical –NH–X étant lié directement ou par le radical phénylamino au noyau naphtalène,

un radical 1-phényl-3-méthylpyrazolone-5, le groupe –NH–X étant lié au noyau phényle, ou un radical 1-(2′,2″-disulfostilbène)-3-méthylpyrazolone-(5), le groupe –NH–X étant lié en position 4″; et X est le radical α,β-dibromopropionyle, α-bromoacryloyle, β-chloroacryloyle, 2,6-difluoro-5-chloropyrimidinyle, 2-fluoro-5,6-dichloropyrimidinyle, 2-fluoro-5-chloro-6-chlorométhylpyrimidinyle ou 2-fluoro-5-chloro-6-méthylpyrimidinyle; et Ka représente un cation alcalin.

9. Complexes de chrome selon la revendication 8, dans lesquels B représente le reste de l'acétylacétone lié en complexe.

10. Complexes de chrome selon la revendication 8, de formule

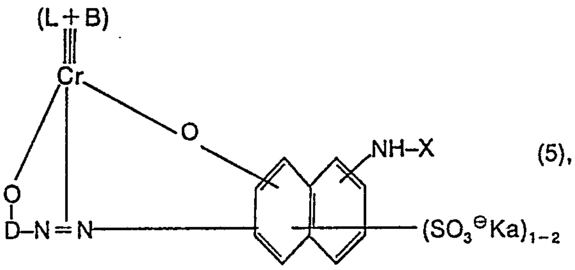

(5),

dans laquelle B, D, L et Ka ont les significations données dans la revendication 8; le groupe azo est lié au noyau naphtalène en position ortho par rapport à –O–; X représente le radical α,β-dibromopropionyle ou α-bromoacryloyle, et le complexe de chrome ne contient pas plus de 1 ou 2 groupes sulfo.

11. Procédé pour la préparation des complexes de chrome selon la revendication 1, caractérisé en ce que l'on fait réagir un composé organique complexant, bidenté, qui contient le reste B, avec un complexe de chrome 1:1 de formule

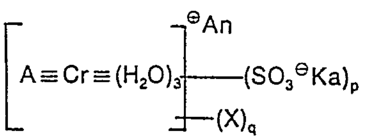

(6),

dans laquelle A et Ka ont les significations données dans la revendication 1 et p vaut 0, 1, 2 ou 3, q vaut 0, 1 ou 2, et An est un anion, en milieu aqueux, éventuellement en présence d'un ligand L monofonctionnel incolore différent de l'eau, et éventuellement on fait réagir ensuite le complexe de chrome obtenu avec un ou des composés introduisant le(s) reste(s) X réactif(s) avec les fibres, le reste B, lorsque p vaut 0, contenant au moins un groupe sulfo.

12. Procédé selon la revendication 11, caractérisé en ce que l'on fait réagir le composé organique complexant, bidenté, qui contient le reste B, avec le complexe de chrome 1:1 de formule (6), à une température de 60 à 100 °C et à un pH de 5 à 11.

13. Procédé selon la revendication 11, caractérisé en ce que l'on effectue la réaction avec un composé introduisant le(s) groupe(s) réactif(s), à une température de 15 à 30 °C et à un pH de 5 à 8.

14. Procédé pour la teinture de matériau textile avec des complexes de chrome selon les revendications 1 à 10, caractérisé en ce que l'on utilise un bain aqueux qui contient le complexe de chrome 1:1 de formule

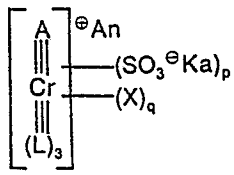

(11),

dans laquelle A, L, X et Ka ont les significations données dans la revendication 1, et p vaut de 0 à 3, q vaut de 0 à 2, et An est un anion, et un composé introduisant le reste B, le matériau textile et éventuellement d'autres additifs, on porte éventuellement par paliers le bain à 100 °C, puis on l'alcalinise, et on termine la teinture, le reste B contenant, dans le cas où p vaut 0, au moins un groupe sulfo, et dans le cas où q vaut 0, au moins un radical X réactif avec les fibres.

15. Procédé selon la revendication 14, caractérisé en ce que l'on utilise les composés introduisant le reste B et le complexe de chrome 1:1 de formule (11) en un rapport molaire allant de 2:1 à 1:1.

16. Procédé selon la revendication 14, caractérisé en ce que l'on porte à 60–80 °C, en l'espace de 10 à 45 minutes, le bain de teinture qui contient les composés indiqués dans la revendication 14, on maintient cette température de bain pendant 10 à 45 minutes, et on la porte ensuite à 100 °C en l'espace de 10 à 30 minutes, on maintient cette température pendant 30 à 90 minutes, on refroidit à 85 °C, on ajuste le pH du bain à 8–9 et on poursuit le traitement pendant encore 10 à 30 minutes à 85 °C.

17. Procédé selon la revendication 14, caractérisé en ce que le bain contient comme autres additifs un acide organique ou minéral, en particulier de l'acide acétique, un sel alcalin ou d'ammonium, en particulier du sulfate d'ammonium, et éventuellement un agent d'unisson.

18. Procédé selon la revendication 14, caractérisé par le fait qu'en tant que matériaux textiles, on utilise un polyamide synthétique ou naturel.

19. Utilisation des complexes de chrome selon la revendication 1, pour la teinture de matériaux textiles.

20. Le matériau textile teint selon l'une des revendications 14 ou 19.